(19) Europäisches Patentamt
European Patent Office
Office européen des brevets

(11) **EP 4 530 669 A1**

(12) **EUROPEAN PATENT APPLICATION**
published in accordance with Art. 153(4) EPC

(43) Date of publication:
**02.04.2025 Bulletin 2025/14**

(21) Application number: 23822994.2

(22) Date of filing: **07.06.2023**

(51) International Patent Classification (IPC):
**G01S 13/32** (2006.01)

(52) Cooperative Patent Classification (CPC):
**G01S 13/32**

(86) International application number:
**PCT/CN2023/098783**

(87) International publication number:
**WO 2023/241425 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.06.2022 CN 202210667206**
**15.07.2022 CN 202210829804**

(71) Applicant: **Huawei Technologies Co., Ltd.
Shenzhen, Guangdong 518129 (CN)**

(72) Inventors:
• **DUAN, Ruiyang
Shenzhen, Guangdong 518129 (CN)**
• **LI, Xueru
Shenzhen, Guangdong 518129 (CN)**
• **LI, Yuke
Shenzhen, Guangdong 518129 (CN)**

(74) Representative: **Maiwald GmbH
Engineering
Elisenhof
Elisenstrasse 3
80335 München (DE)**

(54) **SENSING METHOD, COMMUNICATION APPARATUS, AND COMMUNICATION SYSTEM**

(57) Embodiments of this application provide a sensing method, a communication apparatus, and a communication system. The sensing method is applied to a first communication apparatus. The sensing method includes: sending a first sensing signal, where the first sensing signal includes first sub-signals in N periods, a first sub-signal in an $n^{th}$ period is a signal obtained by performing phase modulation on a second sub-signal based on an $n^{th}$ element in a first sequence, N is a positive integer greater than 0, n=1, 2, ..., N, and the first sequence is a binary sequence that includes N elements. Because the first sequence is any sequence in a preset sequence or the first sequence is a sequence obtained by performing cyclic shift on any sequence in the preset sequence, in a process in which the first communication apparatus performs sensing, the first sensing signal generated based on the first sequence can suppress interference of a signal transmitted by another communication apparatus, so that the first communication apparatus has a strong interference suppression capability, thereby improving sensing reliability of the first communication apparatus.

200

S210: Send a first sensing signal

S230: Receive a first signal and a second signal

S240: Determine a distance between a first communication apparatus and a target object based on the first sensing signal, the first signal, and the second signal

FIG. 10

## Description

This application claims priority to Chinese Patent Application No. 202210667206.4, filed with the China National Intellectual Property Administration on June 13, 2022 and entitled "PHASE MODULATION FMCW INTERFERENCE SUPPRESSION METHOD", and to Chinese Patent Application No. 202210829804.7, filed with the China National Intellectual Property Administration on July 15, 2022 and entitled "SENSING METHOD, COMMUNICATION APPARATUS, AND COMMUNICATION SYSTEM" , which are incorporated herein by reference in their entireties.

## TECHNICAL FIELD

Embodiments of this application relate to the field of communication technologies, and more specifically, to a sensing method, a communication apparatus, and a communication system.

## BACKGROUND

A radio detection and ranging (radio detection and ranging, Radar) (briefly referred to as radar) technology is one of the current most frequently used radio sensing technologies. A principle thereof is described as follows. A radar transmits a sensing signal to specific space, and the sensing signal is reflected to form an echo signal after reaching a target. The radar receives the echo signal, and performs a correlation operation on the echo signal and the sensing signal to obtain spatial information of the target.

Frequency modulated continuous wave (frequency modulated continuous wave, FMCW) is one of the current most commonly used radar sensing waveforms. However, an FMCW-based radar technology is easily affected by an interference signal. For example, in a scenario in which a plurality of radars simultaneously perform sensing, a sensing signal and/or an echo signal generated by one radar may cause interference to an echo signal of another radar. In this way, the another radar may easily generate a false target in a sensing process.

To reduce a probability of an echo signal of a radar being interfered, a sensing signal generated by the radar is usually processed in a time division, frequency division, or code division manner. For example, based on a pseudo-random sequence, a start time, a start frequency, or a phase of the sensing signal generated by the radar in a different period is adjusted. However, the time division manner increases a radar ranging time. The frequency division manner reduces a bandwidth actually occupied by the signal, thereby reducing a ranging resolution. Periodic cross-correlation properties of a pseudo-random sequence used in the code division manner are relatively poor. Therefore, an interference suppression capability of this manner for the echo signal of the radar is relatively limited, and reliability of radar sensing is reduced.

## SUMMARY

Embodiments of this application provide a sensing method, a communication apparatus, and a communication system. The sensing method can suppress interference of a signal transmitted by another communication apparatus, so that the communication apparatus has a relatively strong interference suppression capability, thereby improving sensing reliability of the communication apparatus.

According to a first aspect, a sensing method is provided. The sensing method may be performed by a first communication apparatus, or may be performed by a component of the first communication apparatus, for example, a processor, a chip, or a chip system of the first communication apparatus, or may be implemented by a logical module or software that can implement all or some functions of the first communication apparatus.

The sensing method includes: sending a first sensing signal, where the first sensing signal includes first sub-signals in N periods, a first sub-signal in an $n^{th}$ period is a signal obtained by performing phase modulation on a second sub-signal based on an $n^{th}$ element in a first sequence, N is a positive integer greater than 0, n=1, 2, ..., N, and the first sequence is a binary sequence that includes N elements;

when N=8, the first sequence is any one of a first preset sequence, a second preset sequence, a third preset sequence, and a fourth preset sequence, or the first sequence is a sequence obtained by performing cyclic shift on any one of a first preset sequence, a second preset sequence, a third preset sequence, and a fourth preset sequence, where
the first preset sequence is {1, 1, 1, 1, 1, 1, 1, 1},
the second preset sequence is {1, -1, 1, -1, 1, -1, 1, -1},
the third preset sequence is {1, -1, -1, 1, 1, -1, -1, 1}, and
the fourth preset sequence is {1, -1, -1, -1, -1, 1, 1, 1} or {1, -1, 1, 1, -1, 1, -1, 1}; and
when N=16, the first sequence is any one of a fifth preset sequence, a sixth preset sequence, a seventh preset sequence, an eighth preset sequence, and a ninth preset sequence, or the first sequence is a sequence obtained by performing cyclic shift on any one of a fifth preset sequence, a sixth preset sequence, a seventh preset sequence, an eighth preset sequence, and a ninth preset sequence, where

the fifth preset sequence is {1, 1, 1, 1, 1, 1, 1, 1, 1, 1, 1, 1, 1, 1, 1, 1};

the sixth preset sequence is {1, -1, 1, -1, 1, -1, 1, -1, 1, -1, 1, -1, 1, -1, 1, -1};

the seventh preset sequence is {1, 1, -1, -1, 1, 1, -1, -1, 1, 1, -1, -1, 1, 1, -1, -1};

the eighth preset sequence is {1, 1, 1, -1, -1, -1, -1, 1, 1, 1, 1, -1, -1, -1, -1, 1}, or

the eighth preset sequence is {1, 1, -1, 1, -1, -1, 1, -1, 1, 1, -1, 1, -1, -1, 1, -1}; and

the ninth preset sequence is {1, -1, 1, 1, -1, -1, -1, 1, -1, 1, -1, -1, 1, 1, 1, -1 }, or

the ninth preset sequence is {1, -1, -1, -1, 1, 1, -1, 1, -1, 1, 1, 1, -1, -1, 1, -1 }, or

the ninth preset sequence is {1, 1, 1, -1, 1, 1, 1, -1, -1, -1, -1, 1, -1, -1, -1, 1}, or

the ninth preset sequence is {1, -1, -1, 1, 1, -1, 1, -1, -1, 1, 1, -1, -1, 1, -1, 1}, or

the ninth preset sequence is {1, 1, 1, 1, 1, -1, -1, -1, -1, -1, -1, -1, -1, 1, 1, 1}, or

the ninth preset sequence is {1, 1, 1, -1, 1, -1, -1, -1, -1, -1, -1, 1, -1, 1, 1, 1}, or

the ninth preset sequence is {1, -1, 1, 1, -1, -1, -1, -1, -1, 1, -1, -1, 1, 1, 1, 1}, or

the ninth preset sequence is {1, -1, -1, -1, -1, -1, 1, 1, -1, 1, 1, 1, 1, 1, -1, -1 }, or

the ninth preset sequence is {1, -1, 1, 1, 1, 1, -1, 1, -1, 1, -1, -1, -1, -1, 1, -1 }, or

the ninth preset sequence is {1, -1, -1, -1, -1, 1, 1, -1, -1, 1, 1, 1, 1, -1, -1, 1}, or

the ninth preset sequence is {1, -1, -1, -1, -1, 1, 1, -1, 1, 1, 1, 1, -1, -1, -1 }, or

the ninth preset sequence is {1, 1, 1, -1, 1, 1, -1, 1, -1, -1, -1, 1, -1, -1, 1, -1 }, or

the ninth preset sequence is {1, -1, 1, 1, -1, 1, 1, 1, -1, 1, -1, -1, 1, -1, -1, -1 }, or

the ninth preset sequence is {1, -1, -1, -1, 1, 1, 1, -1, -1, 1, 1, 1, -1, -1, -1, 1}, or

the ninth preset sequence is {1, -1, 1, 1, -1, -1, 1, -1, -1, 1, -1, -1, 1, 1, -1, 1}, or

the ninth preset sequence is {1, -1, 1, -1, 1, 1, -1, 1, -1, 1, -1, 1, -1, -1, 1, -1}.

In this embodiment of this application, because the first sensing signal is a sensing signal obtained based on a preset sequence, in a sensing process of the first communication apparatus, the first sensing signal may suppress interference of a signal transmitted by another communication apparatus, so that the first communication apparatus has a relatively strong interference suppression capability, thereby improving sensing reliability of the first communication apparatus.

In addition, in this embodiment of this application, a sensing time of the first communication apparatus is not increased, and a bandwidth actually occupied by a signal is not reduced, so that a sensing resolution is not reduced.

With reference to the first aspect, in some implementations of the first aspect, after the sending a first sensing signal, the sensing method further includes: receiving a first signal and a second signal; and determining a distance between the first communication apparatus and a target object based on the first sensing signal, the first signal, and the second signal, where the first signal is a signal obtained by reflecting the first sensing signal by the target object; the second signal includes a second sensing signal and/or a signal obtained by reflecting the second sensing signal by the target object, the second sensing signal is transmitted by a second communication apparatus, the second sensing signal includes third sub-signals in N periods, a third sub-signal in an $n^{th}$ period is a signal obtained by performing phase modulation on the second sub-signal based on an $n^{th}$ element in a second sequence, and the second sequence is a binary sequence that includes N elements; when N=8, the second sequence is any one of the first preset sequence, the second preset sequence, the third preset sequence, and the fourth preset sequence, or the second sequence is a sequence obtained by performing cyclic shift on any one of the first preset sequence, the second preset sequence, the third preset sequence, and the fourth preset sequence, and the second sequence and the first sequence are different preset sequences; and when N=16, the second sequence is any one of the fifth preset sequence, the sixth preset sequence, the seventh preset sequence, the eighth preset sequence, and the ninth preset sequence, or the second sequence is a sequence obtained by performing cyclic shift on any one of the fifth preset sequence, the sixth preset sequence, the seventh preset sequence, the eighth preset sequence, and the ninth preset sequence, and the second sequence and the first sequence are different preset sequences.

Each of the first sequence and the second sequence is any sequence in the preset sequence, or each of the first sequence and the second sequence is a sequence obtained by performing cyclic shift on any sequence in the preset sequence, and the first sequence and the second sequence are different preset sequences. In this case, it can be learned from the foregoing descriptions of the first to the ninth preset sequences that the first sequence and the second sequence not only have perfect periodic correlation, but also have relatively good aperiodic correlation. In this way, for a case in which the first communication apparatus receives the second signal in each period of the N periods, because the first sequence and the second sequence have perfect periodic correlation, the first communication apparatus can eliminate a beat frequency signal generated by the second signal, so that the first communication apparatus can perfectly suppress interference caused by the second sensing signal transmitted by the second communication apparatus to a sensing process of the first communication apparatus.

In addition, for a case in which the first communication apparatus receives the second signal starting from a specific period of the N periods, although the first communication apparatus cannot completely eliminate, in a first group of N periods, the beat frequency signal generated by the second signal, because the first sequence and the second sequence have relatively good aperiodic correlation, a degree of interference caused by the second signal to the first communication apparatus is relatively small. In addition, after the first group of N periods, the first communication apparatus also receives the second signal in each period of the N periods. Therefore, because the first sequence and the second sequence have perfect periodic correlation, the first communication apparatus can eliminate the beat frequency signal generated by the second signal. Therefore, the first communication apparatus can filter out, based on sensing results in a plurality of groups of N periods, incorrect sensing results generated in the first group of N periods. In this way, the first communication apparatus can also better suppress interference caused by the second sensing signal transmitted by the second communication apparatus to the sensing process of the first communication apparatus. Further, the interference suppression capability of the first communication apparatus is further enhanced, and the sensing reliability of the first communication apparatus is improved.

With reference to the first aspect, in some implementations of the first aspect, before the sending a first sensing signal, the sensing method further includes: determining the first sequence; and performing phase modulation on the second sub-signal based on the $n^{th}$ element in the first sequence, to obtain the first sensing signal.

With reference to the first aspect, in some implementations of the first aspect, the determining the first sequence includes: detecting the second signal, where the second signal includes the second sensing signal and/or the signal obtained by reflecting the second sensing signal by the target object; determining the second sequence based on the second signal and a preset orthogonal sequence set; and determining the first sequence from a sequence in the preset orthogonal sequence set other than the second sequence, where when N=8, the preset orthogonal sequence set includes the first preset sequence, the second preset sequence, the third preset sequence, and the fourth preset sequence; and when N=16, the preset orthogonal sequence set includes the fifth preset sequence, the sixth preset sequence, the seventh preset sequence, the eighth preset sequence, and the ninth preset sequence.

Before the first communication apparatus sends the first sensing signal, the first communication apparatus first detects a sensing signal of another communication apparatus, and determines, based on the detected sensing signal, a preset sequence for performing phase modulation on the sensing signal. Then, the first communication apparatus obtains the sensing signal of the first communication apparatus by using a preset sequence that is not used by another communication apparatus. In this way, the following case can be prevented: The first communication apparatus and the second communication apparatus use a same preset sequence, and the first communication apparatus cannot suppress interference caused by the second sensing signal transmitted by the second communication apparatus to the sensing process of the first communication apparatus.

With reference to the first aspect, in some implementations of the first aspect, the first sequence is a preconfigured sequence.

With reference to the first aspect, in some implementations of the first aspect, the first communication apparatus is a radar, or the first communication apparatus is a terminal device or a network device having a radar function.

With reference to the first aspect, in some implementations of the first aspect, the second sub-signal includes a frequency modulated continuous wave FMCW signal, a cyclic prefix orthogonal frequency division multiplexing CP-OFDM signal, a discrete Fourier transform spread orthogonal frequency division multiplexing DFT-s-OFDM signal, or a single carrier SC signal.

According to a second aspect, a signal generation method is provided. The method may be performed by a first communication apparatus, or may be performed by a component of the first communication apparatus, for example, a processor, a chip, or a chip system of the first communication apparatus, or may be implemented by a logical module or software that can implement all or some functions of the first communication apparatus.

The method includes: determining a first sequence, where the first sequence includes N elements, N is a positive integer greater than 0, a maximum periodic cross-correlation value between the first sequence and a second sequence is 0, each of the first sequence and the second sequence is a binary sequence that includes N elements, and the second sequence is a sequence for performing phase modulation on a second sensing signal transmitted by a second communication apparatus; and performing phase modulation on a second sub-signal based on an $n^{th}$ element in the first sequence, to obtain a first sensing signal, where the first sensing signal is used to perform ranging on a target object.

The maximum periodic cross-correlation value between the first sequence and the second sequence is 0, that is, the first sequence and the second sequence have perfect periodic correlation. For a case in which the first communication apparatus receives a second signal in each of N periods, because the first sequence and the second sequence have perfect periodic correlation, the first communication apparatus can eliminate a beat frequency signal generated by the second signal. In this way, the first communication apparatus can perfectly suppress interference caused by a second sensing signal transmitted by a second communication apparatus to a sensing process of the first communication apparatus. Further, an interference suppression capability of the first communication apparatus is enhanced, and sensing reliability of the first communication apparatus is improved.

With reference to the second aspect, in some implementations of the second aspect, an absolute value of a maximum aperiodic cross-correlation value between the second sequence and the first sequence is less than or equal to a threshold.

If the absolute value of the maximum aperiodic cross-correlation value between the second sequence and the first sequence is less than or equal to the threshold, it may be considered that the first sequence and the second sequence have relatively good aperiodic correlation. For a case in which the first communication apparatus receives the second signal starting from a specific period of the N periods, although the first communication apparatus cannot completely eliminate, in a first group of N periods, the beat frequency signal generated by the second signal, because the first sequence and the second sequence have relatively good aperiodic correlation, a degree of interference caused by the second signal to the first communication apparatus is relatively small. In addition, after the first group of N periods, the first communication apparatus also receives the second signal in each period of the N periods. Therefore, because the first sequence and the second sequence have perfect periodic correlation, the first communication apparatus can eliminate the beat frequency signal generated by the second signal. Therefore, the first communication apparatus can filter out, based on sensing results in a plurality of groups of N periods, incorrect sensing results generated in the first group of N periods. In this way, the first communication apparatus can also better suppress interference caused by the second sensing signal transmitted by the second communication apparatus to the sensing process of the first communication apparatus. Further, the interference suppression capability of the first communication apparatus is further enhanced, and the sensing reliability of the first communication apparatus is improved.

With reference to the second aspect, in some implementations of the second aspect, the determining the first sequence includes: detecting a second signal, where the second signal includes the second sensing signal and/or a signal obtained by reflecting the second sensing signal by the target object, the second sensing signal includes second sub-signals in N periods, and a second sub-signal in an $n^{th}$ period is a signal obtained by performing phase modulation on the second sub-signal based on an $n^{th}$ element in the second sequence; determining the second sequence based on the second signal and a preset orthogonal sequence set; and determining a sequence in the preset orthogonal sequence set other than the second sequence as the first sequence.

With reference to the second aspect, in some implementations of the second aspect, the first sequence is a preconfigured sequence.

With reference to the second aspect, in some implementations of the second aspect, N is equal to 8.

With reference to the second aspect, in some implementations of the second aspect, the second sequence and the first sequence are two different sequences in a first preset sequence, a second preset sequence, a third preset sequence, and a fourth preset sequence, or the second sequence and the first sequence are sequences obtained by performing cyclic shift on at least one of two different sequences in the first preset sequence, the second preset sequence, the third preset sequence, and the fourth preset sequence, where the first preset sequence is {1, 1, 1, 1, 1, 1, 1, 1}; the second preset sequence is {1, -1, 1, -1, 1, -1, 1, -1}; the third preset sequence is {1, -1, -1, 1, 1, -1, -1, 1}; and the fourth preset sequence is {1, -1, -1, -1, -1, 1, 1, 1} or {1, -1, 1, 1, -1, 1, - 1, -1}.

With reference to the second aspect, in some implementations of the second aspect, N is equal to 16.

With reference to the second aspect, in some implementations of the second aspect, the second sequence and the first sequence are two different sequences in a fifth preset sequence, a sixth preset sequence, a seventh preset sequence, an eighth preset sequence, and a ninth preset sequence, or the first sequence and the first sequence are sequences obtained by performing cyclic shift on at least one of two different sequences in the fifth preset sequence, the sixth preset sequence, the seventh preset sequence, the eighth preset sequence, and the ninth preset sequence, where

the fifth preset sequence is {1, 1, 1, 1, 1, 1, 1, 1, 1, 1, 1, 1, 1, 1, 1, 1};
the sixth preset sequence is {1, -1, 1, -1, 1, -1, 1, -1, 1, -1, 1, -1, 1, -1, 1, -1};
the seventh preset sequence is {1, 1, -1, -1, 1, 1, -1, -1, 1, 1, -1, -1, 1, 1, -1, -1};
the eighth preset sequence is {1, 1, 1, -1, -1, -1, -1, 1, 1, 1, 1, -1, -1, -1, -1, 1}, or
the eighth preset sequence is {1, 1, -1, 1, -1, -1, 1, -1, 1, 1, -1, 1, -1, -1, 1, -1}; and
the ninth preset sequence is {1, -1, 1, 1, -1, -1, -1, 1, -1, 1, -1, -1, 1, 1, 1, -1 }, or
the ninth preset sequence is {1, -1, -1, -1, 1, 1, -1, 1, -1, 1, 1, 1, -1, -1, 1, -1 }, or
the ninth preset sequence is {1, 1, 1, -1, 1, 1, 1, -1, -1, -1, -1, 1, -1, -1, -1, 1}, or
the ninth preset sequence is {1, -1, -1, 1, 1, -1, 1, -1, -1, 1, 1, -1, -1, 1, -1, 1}, or
the ninth preset sequence is {1, 1, 1, 1, 1, -1, -1, -1, -1, -1, -1, -1, -1, 1, 1, 1}, or
the ninth preset sequence is {1, 1, 1, -1, 1, -1, -1, -1, -1, -1, -1, 1, -1, 1, 1, 1}, or
the ninth preset sequence is {1, -1, 1, 1, -1, -1, -1, -1, 1, -1, -1, 1, 1, 1, 1}, or
the ninth preset sequence is {1, -1, -1, -1, -1, -1, 1, 1, -1, 1, 1, 1, 1, -1, -1 }, or
the ninth preset sequence is {1, -1, 1, 1, 1, 1, -1, 1, -1, 1, -1, -1, -1, -1, 1, -1 }, or
the ninth preset sequence is {1, -1, -1, -1, -1, 1, 1, 1, -1, 1, 1, 1, 1, -1, -1, 1}, or
the ninth preset sequence is {1, -1, -1, -1, -1, 1, 1, 1, -1, 1, 1, 1, 1, -1, -1, -1 }, or

the ninth preset sequence is {1, 1, 1, -1, 1, 1, -1, 1, -1, -1, -1, 1, -1, -1, 1, -1 }, or
the ninth preset sequence is {1, -1, 1, 1, -1, 1, 1, 1, -1, 1, -1, -1, 1, -1, -1, -1 }, or
the ninth preset sequence is {1, -1, -1, -1, 1, 1, 1, -1, -1, 1, 1, 1, -1, -1, -1, 1}, or
the ninth preset sequence is {1, -1, 1, 1, -1, -1, 1, -1, -1, 1, -1, -1, 1, 1, -1, 1}, or
the ninth preset sequence is {1, -1, 1, -1, 1, 1, -1, 1, -1, 1, -1, 1, -1, -1, 1, -1}.

With reference to the second aspect, in some implementations of the second aspect, the first communication apparatus is a radar, or the first communication apparatus is a terminal device or a network device having a radar function.

For technical effects not described in any possible implementation of the second aspect, refer to technical effects of a corresponding implementation of the first aspect. Details are not described herein again.

According to a third aspect, a communication system is provided, where the communication system includes: a first communication apparatus, configured to send a first sensing signal, where the first sensing signal includes first sub-signals in N periods, a first sub-signal in an $n^{th}$ period is a signal obtained by performing phase modulation on a second sub-signal based on an $n^{th}$ element in a first sequence, N is a positive integer greater than 0, n=1, 2, ..., N, and the first sequence is a binary sequence that includes N elements; and a second communication apparatus, configured to send a second sensing signal, where the second sensing signal includes third sub-signals in N periods, a third sub-signal in an $n^{th}$ period is a signal obtained by performing phase modulation on the second sub-signal based on an $n^{th}$ element in a second sequence, and the second sequence is a binary sequence that includes N elements; the first communication apparatus is further configured to receive a first signal and a second signal, where the first signal is a signal obtained by reflecting the first sensing signal by a target object, and the second signal includes the second sensing signal and/or a signal obtained by reflecting the second sensing signal by the target object; the first communication apparatus is further configured to determine a distance between the first communication apparatus and the target object based on the first sensing signal, the first signal, and the second signal;

when N=8, the first sequence is any one of a first preset sequence, a second preset sequence, a third preset sequence, and a fourth preset sequence, or the first sequence is a sequence obtained by performing cyclic shift on any one of a first preset sequence, a second preset sequence, a third preset sequence, and a fourth preset sequence, the second sequence is any one of the first preset sequence, the second preset sequence, the third preset sequence, and the fourth preset sequence, or the second sequence is a sequence obtained by performing cyclic shift on any one of the first preset sequence, the second preset sequence, the third preset sequence, and the fourth preset sequence, and the second sequence and the first sequence are different preset sequences, where
the first preset sequence is {1, 1, 1, 1, 1, 1, 1, 1},
the second preset sequence is {1, -1, 1, -1, 1, -1, 1, -1},
the third preset sequence is {1, -1, -1, 1, 1, -1, -1, 1}, and
the fourth preset sequence is {1, -1, -1, -1, -1, 1, 1, 1} or {1, -1, 1, 1, -1, 1, -1, -1}; and
when N=16, the first sequence is any one of a fifth preset sequence, a sixth preset sequence, a seventh preset sequence, an eighth preset sequence, and a ninth preset sequence, or the first sequence is a sequence obtained by performing cyclic shift on any one of a fifth preset sequence, a sixth preset sequence, a seventh preset sequence, an eighth preset sequence, and a ninth preset sequence, and
the second sequence is any one of the fifth preset sequence, the sixth preset sequence, the seventh preset sequence, the eighth preset sequence, and the ninth preset sequence, or the second sequence is a sequence obtained by performing cyclic shift on any one of the fifth preset sequence, the sixth preset sequence, the seventh preset sequence, the eighth preset sequence, and the ninth preset sequence, and the second sequence and the first sequence are different preset sequences, and the second sequence and the first sequence are different preset sequences, where
the fifth preset sequence is {1, 1, 1, 1, 1, 1, 1, 1, 1, 1, 1, 1, 1, 1, 1, 1};
the sixth preset sequence is {1, -1, 1, -1, 1, -1, 1, -1, 1, -1, 1, -1, 1, -1, 1, -1};
the seventh preset sequence is {1, 1, -1, -1, 1, 1, -1, -1, 1, 1, -1, -1, 1, 1, -1, -1};
the eighth preset sequence is {1, 1, 1, -1, -1, -1, -1, 1, 1, 1, 1, -1, -1, -1, -1, 1}, or
the eighth preset sequence is {1, 1, -1, 1, -1, -1, 1, -1, 1, 1, -1, 1, -1, -1, 1, -1}; and
the ninth preset sequence is {1, -1, 1, 1, -1, -1, -1, 1, -1, 1, -1, -1, 1, 1, 1, -1 }, or
the ninth preset sequence is {1, -1, -1, -1, 1, 1, -1, 1, -1, 1, 1, 1, -1, -1, 1, -1 }, or
the ninth preset sequence is {1, 1, 1, -1, 1, 1, 1, -1, -1, -1, -1, 1, -1, -1, -1, 1}, or
the ninth preset sequence is {1, -1, -1, 1, 1, -1, 1, -1, -1, 1, 1, -1, -1, 1, -1, 1}, or
the ninth preset sequence is {1, 1, 1, 1, 1, -1, -1, -1, -1, -1, -1, -1, -1, 1, 1, 1}, or
the ninth preset sequence is {1, 1, 1, -1, 1, -1, -1, -1, -1, -1, -1, 1, -1, 1, 1, 1}, or
the ninth preset sequence is {1, -1, 1, 1, -1, -1, -1, -1, -1, 1, -1, -1, 1, 1, 1, 1}, or
the ninth preset sequence is {1, -1, -1, -1, -1, -1, 1, 1, -1, 1, 1, 1, 1, 1, -1, -1 }, or

the ninth preset sequence is {1, -1, 1, 1, 1, 1, -1, 1, -1, 1, -1, -1, -1, -1, 1, -1 }, or
the ninth preset sequence is {1, -1, -1, -1, -1, 1, 1, -1, -1, 1, 1, 1, 1, -1, -1, 1}, or
the ninth preset sequence is {1, -1, -1, -1, -1, 1, 1, 1, -1, 1, 1, 1, 1, -1, -1, -1 }, or
the ninth preset sequence is {1, 1, 1, -1, 1, 1, -1, 1, -1, -1, -1, 1, -1, -1, 1, -1 }, or
the ninth preset sequence is {1, -1, 1, 1, -1, 1, 1, 1, -1, 1, -1, -1, 1, -1, -1, -1 }, or
the ninth preset sequence is {1, -1, -1, -1, 1, 1, 1, -1, -1, 1, 1, 1, -1, -1, -1, 1}, or
the ninth preset sequence is {1, -1, 1, 1, -1, -1, 1, -1, -1, 1, -1, -1, 1, 1, -1, 1}, or
the ninth preset sequence is {1, -1, 1, -1, 1, 1, -1, 1, -1, 1, -1, -1, -1, 1, -1}.

Each of the first sequence and the second sequence is any sequence in the preset sequence, or each of the first sequence and the second sequence is a sequence obtained by performing cyclic shift on any sequence in the preset sequence, and the first sequence and the second sequence are different preset sequences. In this case, it can be learned from the foregoing descriptions of the first to the ninth preset sequences that the first sequence and the second sequence not only have perfect periodic correlation, but also have relatively good aperiodic correlation. In this way, for a case in which the first communication apparatus receives the second signal in each period of the N periods, because the first sequence and the second sequence have perfect periodic correlation, the first communication apparatus can eliminate a beat frequency signal generated by the second signal, so that the first communication apparatus can perfectly suppress interference caused by the second sensing signal transmitted by the second communication apparatus to a sensing process of the first communication apparatus.

In addition, for a case in which the first communication apparatus receives the second signal starting from a specific period of the N periods, although the first communication apparatus cannot completely eliminate, in a first group of N periods, the beat frequency signal generated by the second signal, because the first sequence and the second sequence have relatively good aperiodic correlation, a degree of interference caused by the second signal to the first communication apparatus is relatively small. In addition, after the first group of N periods, the first communication apparatus also receives the second signal in each period of the N periods. Therefore, because the first sequence and the second sequence have perfect periodic correlation, the first communication apparatus can eliminate the beat frequency signal generated by the second signal. Therefore, the first communication apparatus can filter out, based on sensing results in a plurality of groups of N periods, incorrect sensing results generated in the first group of N periods. In this way, the first communication apparatus can also better suppress interference caused by the second sensing signal transmitted by the second communication apparatus to the sensing process of the first communication apparatus. Further, the interference suppression capability of the first communication apparatus is further enhanced, and the sensing reliability of the first communication apparatus is improved.

With reference to the third aspect, in some implementations of the third aspect, before the first communication apparatus is configured to send the first sensing signal, the first communication apparatus is further configured to: determine the first sequence; and perform phase modulation on the second sub-signal based on the $n^{th}$ element in the first sequence, to obtain the first sensing signal.

With reference to the third aspect, in some implementations of the third aspect, the first communication apparatus is further specifically configured to: detect the second signal; determine the second sequence based on the second signal and a preset orthogonal sequence set; and determine the first sequence from a sequence in the preset orthogonal sequence set other than the second sequence, where when N=8, the preset orthogonal sequence set includes the first preset sequence, the second preset sequence, the third preset sequence, and the fourth preset sequence; and when N=16, the preset orthogonal sequence set includes the fifth preset sequence, the sixth preset sequence, the seventh preset sequence, the eighth preset sequence, and the ninth preset sequence.

With reference to the third aspect, in some implementations of the third aspect, the first sequence is a preconfigured sequence.

With reference to the third aspect, in some implementations of the third aspect, before the second communication apparatus is configured to send the second sensing signal, the second communication apparatus is further configured to: determine the second sequence; and perform phase modulation on the second sub-signal based on the $n^{th}$ element in the second sequence, to obtain the second sensing signal.

With reference to the third aspect, in some implementations of the third aspect, the second communication apparatus is further specifically configured to: detect a third signal, where the third signal includes the first sensing signal and/or the signal obtained by reflecting the first sensing signal by the target object; determine the first sequence based on the third signal and a preset orthogonal sequence set; and determine the second sequence from a sequence other than the first sequence in the preset orthogonal sequence set, where when N=8, the preset orthogonal sequence set includes the first preset sequence, the second preset sequence, the third preset sequence, and the fourth preset sequence; and when N=16, the preset orthogonal sequence set includes the fifth preset sequence, the sixth preset sequence, the seventh preset sequence, the eighth preset sequence, and the ninth preset sequence.

With reference to the third aspect, in some implementations of the third aspect, the second sequence is a preconfigured sequence.

With reference to the third aspect, in some implementations of the third aspect, the first communication apparatus is a radar, or the first communication apparatus is a terminal device or a network device having a radar function; and/or the second communication apparatus is a radar, or the second communication apparatus is a terminal device or a network device having a radar function.

With reference to the third aspect, in some implementations of the third aspect, the second sub-signal includes a frequency modulated continuous wave FMCW signal, a cyclic prefix orthogonal frequency division multiplexing CP-OFDM signal, a discrete Fourier transform spread orthogonal frequency division multiplexing DFT-s-OFDM signal, or a single carrier SC signal.

For technical effects of any possible implementation of the third aspect, refer to technical effects of a corresponding implementation of the first aspect. Details are not described herein again.

According to a fourth aspect, a communication apparatus is provided. The communication apparatus is configured to implement the method according to the first aspect, the second aspect, and any possible implementation of the first aspect and the second aspect. The communication apparatus may be the foregoing first communication apparatus, or an apparatus included in the foregoing first communication apparatus, for example, a chip. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement sending and/or receiving functions in the first aspect, the second aspect, and any possible implementation of the first aspect and the second aspect. The transceiver module may include a transceiver circuit, a transceiver machine, a transceiver, or a communication interface. The processing module may be configured to implement processing functions in the first aspect, the second aspect, and any possible implementation of the first aspect and the second aspect.

In some possible designs, the transceiver module includes a sending module and a receiving module, which are respectively configured to implement sending and receiving functions in the first aspect, the second aspect, and any possible implementation of the first aspect and the second aspect.

According to a fifth aspect, a communication apparatus is provided, including one or more processors, one or more memories, and one or more computer programs. The one or more computer programs are stored in the one or more memories. The one or more computer programs include instructions, and when the instructions are executed by the communication apparatus, the communication apparatus is enabled to perform the method according to the first aspect, the second aspect, and any possible implementation of the first aspect and the second aspect.

The communication apparatus may be the foregoing first communication apparatus, or an apparatus included in the foregoing first communication apparatus, for example, a chip.

According to a sixth aspect, a communication apparatus is provided, including a processor and a communication interface, where the communication interface is configured to communicate with a module outside the communication apparatus, and the processor is configured to execute a computer program or instructions, so that the communication apparatus performs the method according to the first aspect, the second aspect, and any possible implementation of the first aspect and the second aspect.

The communication apparatus may be the foregoing first communication apparatus, or an apparatus included in the foregoing first communication apparatus, for example, a chip.

According to a seventh aspect, a communication apparatus is provided, including an interface circuit and a processor, where the interface circuit is a code/data read/write interface circuit, the interface circuit is configured to receive computer executable instructions (the computer executable instructions are stored in a memory, and may be read from the memory directly or through another component) and transmit the computer executable instructions to the processor, and the processor is configured to execute the computer execution instructions, so that the communication apparatus performs the method according to the first aspect, the second aspect, and any possible implementation of the first aspect and the second aspect.

The communication apparatus may be the foregoing first communication apparatus, or an apparatus included in the foregoing first communication apparatus, for example, a chip.

According to an eighth aspect, a communication apparatus is provided, including at least one processor, where the processor is configured to execute a computer program or instructions, so that the communication apparatus performs the method according to the first aspect, the second aspect, and any possible implementation of the first aspect and the second aspect.

The communication apparatus may be the foregoing first communication apparatus, or an apparatus included in the foregoing first communication apparatus, for example, a chip.

In some possible designs, the communication apparatus includes a memory, and the memory is configured to store necessary program instructions and data. The memory may be coupled to the processor, or may be independent of the processor.

In some possible designs, the communication apparatus may be a chip or a chip system. When the apparatus is a chip system, the apparatus may include a chip, or may include a chip and another discrete component.

It may be understood that when the communication apparatus provided in any one of the fourth aspect to the eighth aspect is a chip, the foregoing sending action/function may be understood as output information, and the foregoing receiving action/function may be understood as input information.

According to a ninth aspect, a computer-readable storage medium is provided. The computer-readable storage medium stores instructions. When the instructions run on a communication apparatus, the communication apparatus is enabled to perform the method according to the first aspect, the second aspect, and any possible implementation of the first aspect and the second aspect.

According to a tenth aspect, a computer program product including instructions is provided. When the computer program product is run on a communication apparatus, the communication apparatus is enabled to perform the method according to the first aspect, the second aspect, and any possible implementation of the first aspect and the second aspect.

According to an eleventh aspect, a chip is provided, including at least one processor and an interface circuit, where the interface circuit is configured to provide program instructions or data for the at least one processor, and the at least one processor is configured to execute the program instructions, to implement the method according to the first aspect, the second aspect, and any possible implementation of the first aspect and the second aspect.

**BRIEF DESCRIPTION OF DRAWINGS**

FIG. 1 is a diagram of an architecture of an example of a communication system applicable to an embodiment of this application;

FIG. 2 is a diagram of a time domain waveform of an FMCW of a sawtooth wave;

FIG. 3 is a diagram of a frequency domain waveform of an FMCW of a sawtooth wave;

FIG. 4 is a diagram of FMCW sensing signals, echo signals, and beat frequency signals of a radar in a plurality of periods;

FIG. 5 is a diagram of obtaining a sensing result by a first communication apparatus;

FIG. 6 is a diagram of an FMCW sensing signal, an echo signal, and a beat frequency signal of a first communication apparatus in one period;

FIG. 7 is a diagram of an example in which a sensing signal generated by a first communication apparatus is processed in a time division manner;

FIG. 8 is a diagram of an example in which a sensing signal generated by a first communication apparatus is processed in a frequency division manner;

FIG. 9 is a diagram of an example in which a sensing signal generated by a first communication apparatus is processed in a code division manner;

FIG. 10 is a schematic flowchart of an example of a sensing method according to an embodiment of this application;

FIG. 11 is a diagram of an example of signals sent and received by a first communication apparatus in frequency domain;

FIG. 12 is a diagram of an example of a sensing result obtained by using a sensing method according to an embodiment of this application;

FIG. 13 is a diagram of another example of signals sent and received by a first communication apparatus in frequency domain;

FIG. 14 is a diagram of another example of a sensing result obtained by using a sensing method according to an embodiment of this application;

FIG. 15 is a schematic flowchart of an example of a signal generation method according to an embodiment of this application; and

FIG. 16 to FIG. 18 each are a schematic flowchart of a communication apparatus according to an embodiment of this application.

**DESCRIPTION OF EMBODIMENTS**

The following describes technical solutions of embodiments in this application with reference to accompanying drawings.

For ease of understanding of embodiments of this application, the following descriptions are first provided before embodiments of this application are described.

First, "first", "second", and various reference numerals in the following embodiments are merely used for differentiation for ease of description, but are not intended to limit the scope of embodiments of this application. For example, different sensing signals are distinguished.

Second, "a plurality of" in the embodiments of this application means two or more.

The technical solutions of embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD), a universal mobile telecommunications system (universal mobile telecommunications system, UMTS), a worldwide interoperability for microwave access (worldwide interoperability for microwave access, WiMAX) communication system, a future 5$^{th}$ generation (5$^{th}$ generation, 5G) system, or a new radio (new radio, NR) system.

To facilitate understanding of embodiments of this application, related technical content in this application is briefly described first.

1. Sequence: A sequence may include a plurality of pieces of discrete data, and one piece of data may be referred to as one element of the sequence. According to a value of the element, the sequence may be generally classified into a binary sequence (the value of the element is 1 or - 1), a ternary sequence (the value of the element is 1, -1, or 0), and a multi-ary sequence (there are more than three values of the element).

2. Correlation operation: A correlation operation is to multiply corresponding elements of two sequences and then add multiplication results. For example, it is assumed that there are a sequence $a = [a_1, a_2, a_3]$ and a sequence $b = [b_1, b_2, b_3]$. In this case, a correlation operation between the two sequences is $a_1 \times b_1 + a_2 \times b_2 + a_3 \times b_3$.

3. Periodic correlation operation: When a correlation operation is performed on sequences, a correlation value between two sequences is calculated based on a relative cyclic shift between the sequences. If lengths of the sequences are L, the relative cyclic shift between the sequences may include 2L-1 cases in total: -L+1, -L+2, ..., -1, 0, 1, ..., L-2, and L-1. Therefore, there are a total of 2L-1 values for a periodic correlation operation of the sequences.

For example, it is assumed that there are a sequence $a = [a_1, a_2, a_3]$ and a sequence $b = [b_1, b_2, b_3]$. Then, there are five possibilities of a relative cyclic shift between the two: -2, -1, 0, 1, and 2. Correspondingly, there are five results of a periodic correlation operation of the two:

When the relative cyclic shift is -2, the sequence $a$ and the sequence $b$ are corresponding to the following cases:

$a_2, a_3, a_1$
$b_1, b_2, b_3$

In this case, a periodic correlation result is: $a_2 \times b_1 + a_3 \times b_2 + a_1 \times b_3$.

When the relative cyclic shift is -1, the sequence $a$ and the sequence $b$ are corresponding to the following cases:

$a_3, a_1, a_2$
$b_1, b_2, b_3$

In this case, a periodic correlation result is: $a_3 \times b_1 + a_1 \times b_2 + a_2 \times b_3$.

When the relative cyclic shift is 0, the sequence $a$ and the sequence $b$ are corresponding to the following cases:

$a_1, a_2, a_3$
$b_1, b_2, b_3$

In this case, a periodic correlation result is: $a_1 \times b_1 + a_2 \times b_2 + a_3 \times b_3$ .

When the relative cyclic shift is 1, the sequence $a$ and the sequence $b$ are corresponding to the following cases:

$a_2, a_3, a_1$
$b_1, b_2, b_3$

In this case, a periodic correlation result is: $a_2 \times b_1 + a_3 \times b_2 + a_1 \times b_3$.

When the relative cyclic shift is 2, the sequence $a$ and the sequence $b$ are corresponding to the following cases:

$a_3, a_1, a_2$
$b_1, b_2, b_3$

In this case, a periodic correlation result is: $a_3 \times b_1 + a_1 \times b_2 + a_2 \times b_3$.

4. Aperiodic correlation operation: When a correlation operation is performed on sequences, a correlation value between overlapping elements in two sequences is calculated based on a relative shift between the sequences. If lengths of the sequences are L, the relative shift between the sequences may include 2L-1 cases in total: -L+1, -L+2, ..., -1, 0, 1, ..., L-2, and L-1. Therefore, there are a total of 2L-1 values for an aperiodic correlation operation of the sequences.

For example, it is assumed that there are a sequence $\boldsymbol{a} = [a_1, a_2, a_3]$ and a sequence $\boldsymbol{b} = [b_1, b_2, b_3]$. Then, there are five possibilities of a relative cyclic shift between the two: -2, -1, 0, 1, and 2. Correspondingly, there are five results of a periodic correlation operation of the two:

When the relative shift is -2, the sequence $\boldsymbol{a}$ and the sequence $\boldsymbol{b}$ are corresponding to the following cases:

$a_1, a_2, a_3$
$b_1, b_2, b_3$

In this case, an aperiodic correlation result is: $a_1 \times b_3$.

When the relative shift is -1, the sequence $\boldsymbol{a}$ and the sequence $\boldsymbol{b}$ are corresponding to the following cases:

$a_1, a_2, a_3$
$b_1, b_2, b_3$

In this case, an aperiodic correlation result is: $a_1 \times b_2 + a_2 \times b_3$.

When the relative shift is 0, the sequence $\boldsymbol{a}$ and the sequence $b$ are corresponding to the following cases:

$a_1, a_2, a_3$
$b_1, b_2, b_3$

In this case, an aperiodic correlation result is: $a_1 \times b_1 + a_2 \times b_2 + a_3 \times b_3$.

When the relative shift is 1, the sequence $\boldsymbol{a}$ and the sequence $b$ are corresponding to the following cases:

$a_1, a_2, a_3$
$b_1, b_2, b_3$

In this case, an aperiodic correlation result is: $a_2 \times b_1 + a_3 \times b_2$.

When the relative shift is 2, the sequence $\boldsymbol{a}$ and the sequence $\boldsymbol{b}$ are corresponding to the following cases:

$a_1, a_2, a_3$
$b_1, b_2, b_3$

In this case, an aperiodic correlation result is: $a_3 \times b_1$.

It may be understood that, for two sequences, if cyclic shift is simultaneously performed on one of the two sequences during relative shift, enabling a quantity of overlapping elements of the two sequences to be always equal to a sequence length, a correlation operation of the two sequences is a periodic correlation operation. If cyclic shift is not performed during relative shift, in other words, a quantity of overlapping elements of two sequences decreases as the relative shift increases, a correlation operation of the two sequences is an aperiodic correlation operation.

5. Periodic cross-correlation: If two sequences are different, a periodic correlation operation between the two sequences is referred to as periodic cross-correlation.

6. Aperiodic cross-correlation: If two sequences are different, an aperiodic correlation operation between the two sequences is referred to as aperiodic cross-correlation.

7. Perfect periodic cross-correlation: If a periodic cross-correlation result of two sequences is 0 at all shift locations, the two sequences have perfect periodic cross-correlation properties, or the two sequences are orthogonal to each other. If a periodic cross-correlation result of two sequences has small values at all shift locations, the two sequences have good periodic cross-correlation properties.

8. Perfect aperiodic cross-correlation: If an aperiodic cross-correlation result of two sequences is 0 at all shift locations, the two sequences have perfect aperiodic cross-correlation properties, or the two sequences are orthogonal to each other. If an aperiodic cross-correlation result of two sequences has small values at all shift locations, the two sequences have good aperiodic cross-correlation properties.

9. Periodic cross-correlation peak: For two sequences with a length of $L$, a maximum value of absolute values of $2L$-1 periodic cross-correlation results of the two sequences is referred to as a periodic cross-correlation peak.

10. Aperiodic cross-correlation peak: For two sequences with a length of $L$, a maximum value of absolute values of $2L$-1 aperiodic cross-correlation results of the two sequences is referred to as an aperiodic cross-correlation peak.

11. Sensing: A process in which a radar sends a sensing signal, receives an echo signal generated by reflecting the sensing signal by a target object, and completes ranging, speed measurement, or angle measurement by comparing the echo signal with the sensing signal may be referred to as sensing.

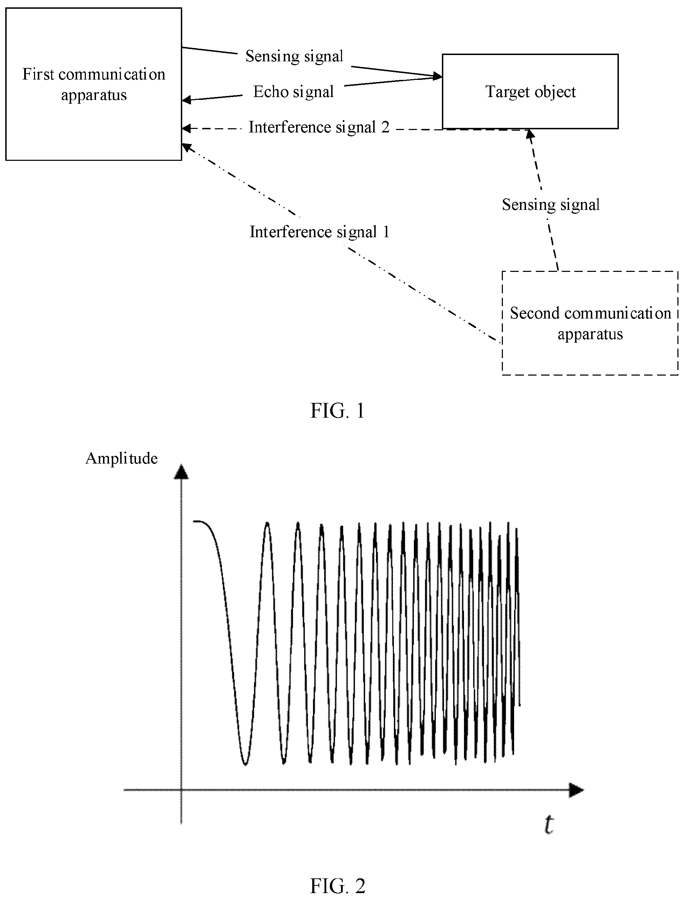

For ease of understanding of embodiments of this application, a communication scenario applicable to a method provided in embodiments of this application is first described in detail with reference to FIG. 1.

FIG. 1 is a diagram of a communication system 100 applicable to a method provided in embodiments of this application.

For example, as shown in FIG. 1, the communication system 100 includes a first communication apparatus. The first communication apparatus first sends a sensing signal, and then receives an echo signal generated by reflecting the sensing signal by a target object. In this way, the first communication apparatus can sense the target object.

Optionally, in an example, the communication system 100 may further include another communication apparatus, for example, a second communication apparatus shown in FIG. 1. The second communication apparatus may also first send a sensing signal, and then receive an echo signal generated by reflecting the sensing signal by the target object. In this way, the second communication apparatus can sense the target object.

It should be noted that, first, a type of the target object described above is not limited in this application. For example, the target object includes but is not limited to a surrounding apparatus (for example, a vehicle), a pedestrian (or a user), an obstacle, and the like.

Second, the foregoing description is provided by using an example in which the first communication apparatus and the second communication apparatus sense a same target object, and shall not constitute a limitation on this application. For example, the first communication apparatus and the second communication apparatus may alternatively sense different target objects. This is not limited in this application.

Third, related functions of the first communication apparatus or the second communication apparatus may be implemented by one device, may be jointly implemented by a plurality of devices, may be implemented by one or more functional modules in one device, may be implemented by one or more chips, or may be implemented by a system on chip (system on chip, SoC) or a chip system. The chip system may include a chip, or may include a chip and another discrete component. This is not specifically limited in this embodiment of this application.

It may be understood that the foregoing function may be a network element in a hardware device, a software function running on dedicated hardware, a combination of hardware and software, or a virtualized function instantiated on a platform (for example, a cloud platform).

In an example, the first communication apparatus and/or the second communication apparatus are/is a radar. In this example, the first communication apparatus and the second communication apparatus may be installed on a terminal device or a network device. This is not limited in this application.

In another example, the first communication apparatus and/or the second communication apparatus are/is a terminal device or a network device having a radar function.

It should be understood that the network device in this application may be any device having a wireless transceiver function. The network device includes but is not limited to an evolved NodeB (evolved NodeB, eNB or eNodeB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), and the like. Alternatively, the network device may be a gNB or a transmission point (TRP or TP) in a 5G system such as an NR system, may be one antenna panel or a group (including a plurality of antenna panels) of antenna panels of the gNB in the 5G system, or may be a network node, such as a baseband unit (BBU) or a distributed unit (distributed unit, DU), that constitutes a gNB or a transmission point.

In some deployments, a gNB may include a central unit (central unit, CU) and a DU. The gNB may further include a radio frequency unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from information at the PHY layer. Therefore, in the architecture, higher layer signaling such as RRC layer signaling may also be considered as being sent by the DU or sent by the DU and the CU. It may be understood that the network device may be a CU node, a DU node, or a device including a CU node and a DU node. In addition, the CU may be classified into a network device in an access network (radio access network, RAN), or the CU may be classified into a network device in a core network (core network, CN). This is not limited in this application.

It should be further understood that the terminal device in this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer with wireless receiving and sending functions, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux® operating system, a Unix® operating system, an Android® operating system, an iOS® operating system, or a Windows® operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

The technical solution in embodiments of this application may be applied to various communication systems. The communication system may be a 3rd generation partnership project (3rd generation partnership project, 3GPP) communication system, for example, a 5G or 6th generation (sixth generation, 6G) mobile communication system or a sidelink (sidelink, SL) system, an ultra-wideband (ultra-wideband, UWB) system, a vehicle to everything (vehicle to everything, V2X) system, or a device-to-device (device-to-device, D2D) communication system, a machine-to-machine (machine-to-machine, M2M) communication system, an internet of things (internet of things, IoT), or another next generation communication system. The communication system may alternatively be a non-3GPP communication system, for example, a wireless local area network (wireless local area network, WLAN) system like Wi-Fi. This is not limited.

The technical solution in embodiments of this application may be applied to various communication scenarios, for example, may be applied to one or more of the following communication scenarios: smart home, D2D, V2X, IoT communication scenarios, and the like.

For example, in a smart home scenario, the first communication apparatus and/or the second communication apparatus may be various smart appliances at home, for example, a smart television and a smart speaker. When track tracing needs to be performed on a person, each smart appliance at home may send a sensing signal to sense the person, to enhance track tracing accuracy.

For another example, in a V2X scenario, the first communication apparatus and/or the second communication apparatus may be an in-vehicle device. The in-vehicle device may send a sensing signal, and receive an echo signal generated by reflecting the sensing signal by a target object (for example, a surrounding vehicle, a pedestrian, or an obstacle), to sense a surrounding road condition.

It should be noted that the communication system and the communication scenario that are applicable to this application and that are described above are merely examples for description, and a communication system and a communication scenario that are applicable to this application are not limited thereto.

An FMCW is a most commonly used radar sensing waveform at present. Therefore, the sensing signal sent by the first communication apparatus and/or the second communication apparatus shown in FIG. 1 may be an FMCW signal. In this way, a frequency of the sensing signal changes with time.

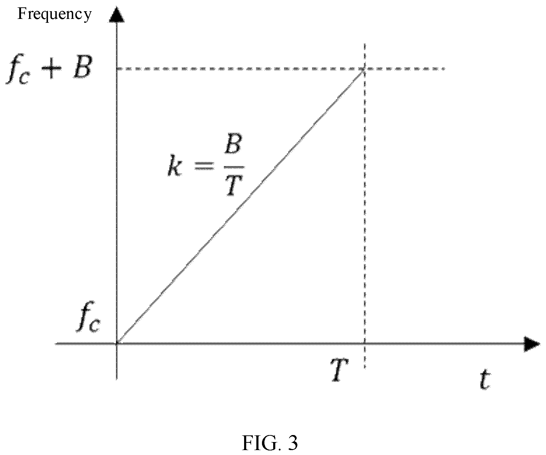

According to different manners in which the frequency changes with time, FMCWs may be classified into a sawtooth wave, a triangular wave, and a trapezoidal wave in frequency domain. The sawtooth wave is a waveform most commonly used by the FMCW. A frequency of the FMCW of the sawtooth wave increases linearly with time. A general expression of the sawtooth wave is $x(t) = cos(2\pi f_c t + \pi k t^2)$, where $0 \leq t \leq T$, $f_c$ represents a carrier frequency, $k$ represents a frequency ramp-up slope, and T represents transmission duration. For example, FIG. 2 is a diagram of a time domain waveform of an FMCW of a sawtooth wave, and FIG. 3 is a diagram of a frequency domain waveform of an FMCW of a sawtooth wave. As shown in FIG. 3, within time from 0 to T, a frequency of the FMCW linearly ramps from $f_c$ to $(f_c+B)$. In this way, a frequency ramp-up slope $k$ of the FMCW of the sawtooth wave is B/T.

It should be noted that an example in which the FMCW described below uses a sawtooth wave is used, and should not constitute a limitation on this application. For example, the FMCW in this embodiment of this application may alternatively be a triangular wave, a trapezoidal wave, or the like.

In an FMCW-based radar technology, because a frequency of a sensing signal sent by a radar changes with time, the radar may obtain, by comparing a frequency difference between the sensing signal transmitted by the radar and an echo signal, time between a moment at which the sensing signal is sent and a moment at which the echo signal is received, and then calculate a distance between the radar and a target object based on the time.

Specifically, in a radar sensing process, the radar repeatedly sends FMCW sensing signals of a plurality of periods, where a signal in each period is referred to as a chirp (chirp) signal. After the echo signal is received, frequency mixing and low-pass filtering are performed on each echo signal and the sensing signal, to obtain a beat frequency signal. For example, if the radar sends chirp signals of M periods in total, in an $m^{th}$ period, after frequency mixing and low-pass filtering are performed on an $m^{th}$ echo signal and the sensing signal, an expression of an obtained beat frequency signal is

$$x_{BF,m}(t) = \cos(2\pi f_c k\tau t + 2\pi f_c t - \pi kt^2) ,$$

where $\tau = 2R/c$, $\tau$ is time between the sensing signal and the $m^{th}$ echo signal (which may also be referred to as a delay corresponding to the target object), R represents the distance between the radar and the target object, and c is a light velocity. For other parameters, refer to the foregoing descriptions. Details are not described herein again. Further, a frequency $f_{BF}$ of the beat frequency signal can be obtained by using fast Fourier transform (fast fourier transform, FFT) to perform spectrum analysis on the beat frequency signal. Because $f_{BF} = k\tau$, $\tau$ can be obtained, and therefore, the distance between the radar and the target object can be calculated according to $\tau = 2R/c$.

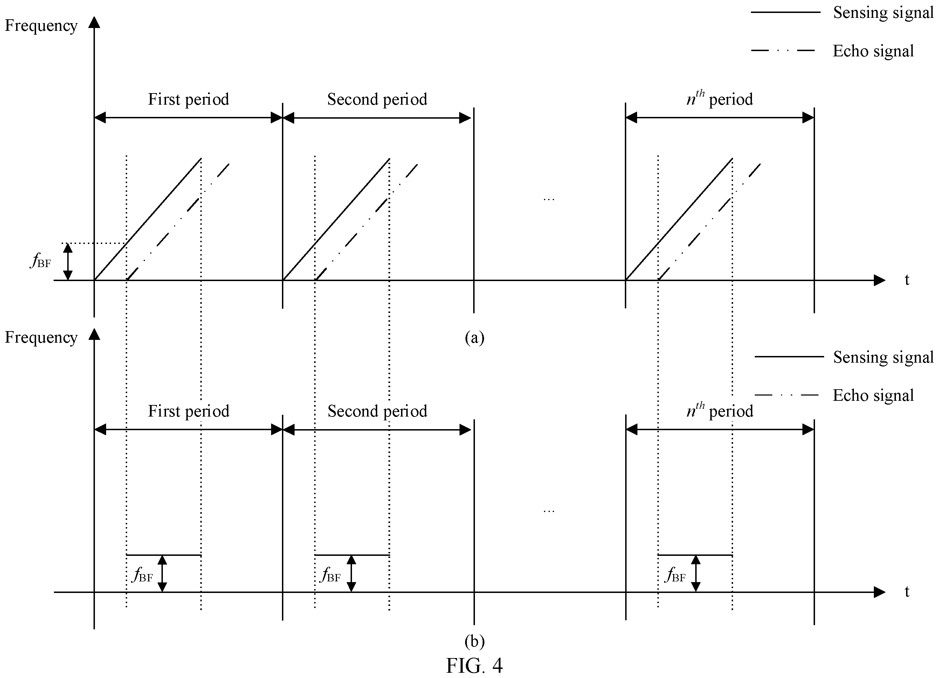

(a) in FIG. 4 is a diagram of FMCW sensing signals and echo signals of the radar in a plurality of periods. (b) in FIG. 4 is a diagram of beat frequency signals in a plurality of periods that are obtained based on the FMCW sensing signals and the echo signals in the plurality of periods shown in (a) in FIG. 4. In a period, the frequency $f_{BF}$ of the beat frequency signal is a difference between a frequency of the sensing signal and a frequency of the echo signal at a same moment.

It should be noted that FIG. 4 shows a case in which there is only one target object. When there are a plurality of target objects, a plurality of echo signals and corresponding beat frequency signals are generated in one period. When time between receiving moments of the plurality of echo signals and sending moments of the sensing signals is different, frequencies of the corresponding beat frequency signals are also different. Generally, it may be considered that a location of the target object does not change in an entire sensing period. Therefore, beat frequency signals generated by a same target object in a plurality of periods are the same. Spectrum analysis and ranging may be performed only on a beat frequency signal in one period, or spectrum analysis and ranging may be performed after beat frequency signals in a plurality of periods are accumulated. Accumulating beat frequency signals in a plurality of periods can effectively increase a signal to noise ratio (signal to noise ratio, SNR) gain after signal processing.

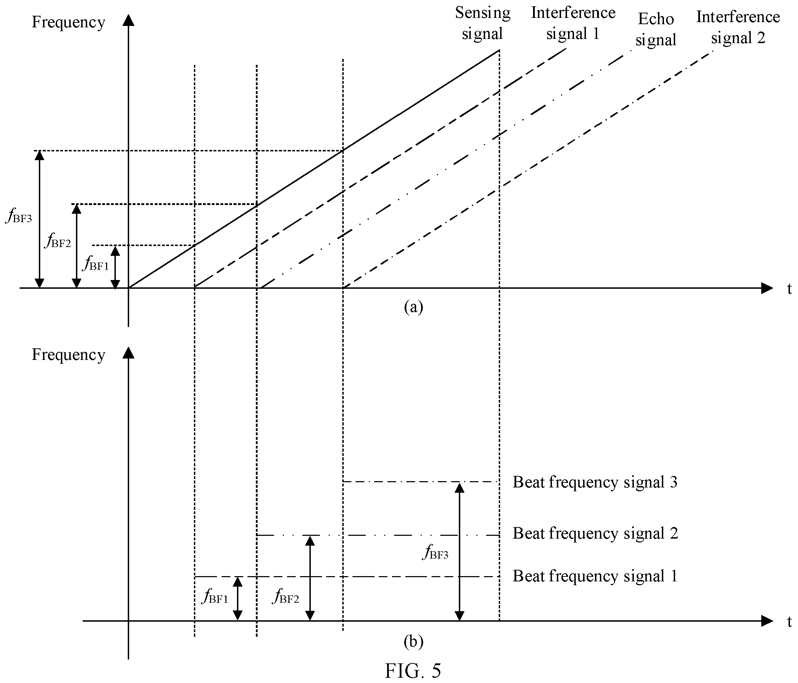

The FMCW-based radar technology is easily affected by an interference signal. For example, in the communication system shown in FIG. 1, if the first communication apparatus and the second communication apparatus use sensing signals of a same waveform (with a same bandwidth and a same frequency ramp-up slope) for sensing, an interference signal of the second communication apparatus for the first communication apparatus mainly includes two sources: one source is the sensing signal generated by the second communication apparatus, that is, an interference signal 1 shown in FIG. 1, and the other source is an interference signal 2 generated by reflecting, by the target object, the sensing signal generated by the second communication apparatus. For example, (a) in FIG. 5 is a diagram of a sensing signal of an FMCW type sent by and signals received by the first communication apparatus in one period. The signals received by the first communication apparatus include an echo signal, an interference signal 1, and an interference signal 2.

In this way, the first communication apparatus analyzes the received signals (the echo signal, the interference signal 1, and the interference signal 2) to obtain the distance between the first communication apparatus and the target object. However, because the first communication apparatus and the second communication apparatus use the sensing signals of the same waveform, the first communication apparatus cannot distinguish between the echo signal and the interference signal. Thus, in a process of analyzing the received signals (the echo signal, the interference signal 1, and the interference signal 2) by the first communication apparatus, a false target object is easily generated.

For example, (b) in FIG. 5 is a diagram of beat frequency signals in one period obtained by the first communication apparatus based on the sensing signal of the FMCW type and the received signals in one period shown in (a) in FIG. 5. Because the signals received by the first communication apparatus include three signals, the first communication apparatus may obtain three beat frequency signals, where a beat frequency signal 1 is a signal obtained through frequency mixing and low-pass filtering are performed on the sensing signal and the interference signal 1. Therefore, a frequency $f_{BF1}$ of the beat frequency signal 1 is a difference between the frequency of the sensing signal and a frequency of the interference signal 1 at a same moment. A beat frequency signal 2 is a signal obtained through frequency mixing and low-pass filtering are performed on the sensing signal and the echo signal. Therefore, a frequency $f_{BF2}$ of the beat frequency signal 2 is a difference between the frequency of the sensing signal and the frequency of the echo signal at a same moment. A beat frequency signal 3 is a signal obtained through frequency mixing and low-pass filtering are performed on the sensing signal and the interference signal 2. Therefore, a frequency $f_{BF3}$ of the beat frequency signal 3 is a difference between the frequency of the sensing signal and a frequency of the interference signal 2 at a same moment.

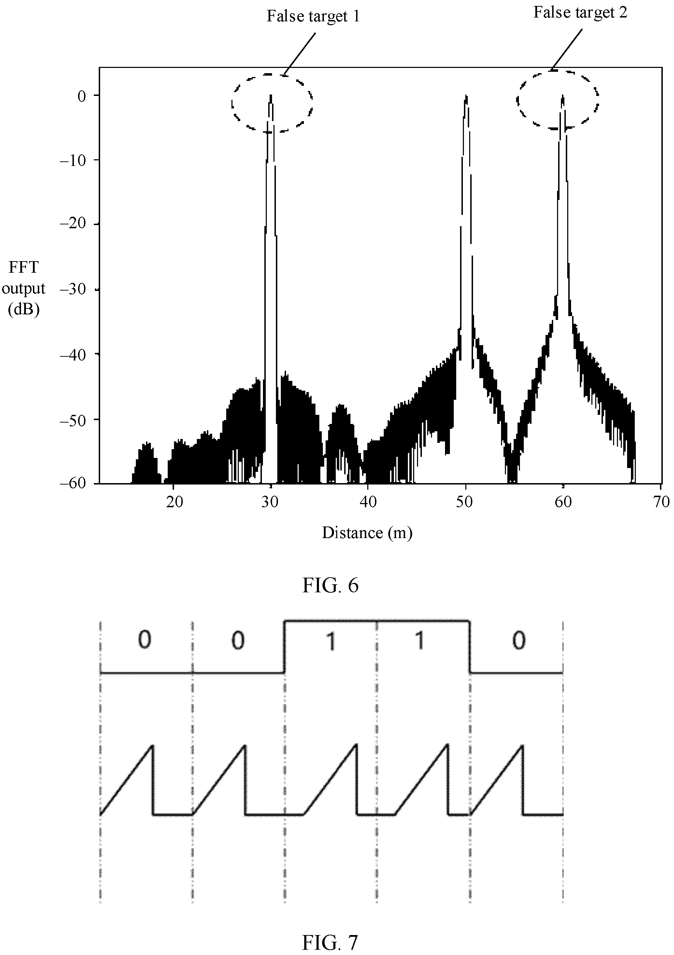

It is assumed that, in FIG. 1, the distance between the first communication apparatus and the target object is 50 m, a distance between the first communication apparatus and the second communication apparatus is 60 m, and a path of the interference signal 2 generated by reflecting, by the target object, the sensing signal generated by the second communication apparatus is 120 m. In this case, the first communication apparatus uses FFT to perform spectrum analysis on the beat frequency signal shown in (b) in FIG. 5, and a diagram of the obtained distance between the first communication apparatus and the target object is shown in FIG. 6. It can be learned from FIG. 6 that the first communication apparatus may obtain three distances: 30 m, 50 m, and 60 m, respectively. 30 m is obtained based on the beat frequency signal 1, 50 m is obtained based on the beat frequency signal 2, and 60 m is obtained based on the beat frequency signal 3. Because the interference signal 1 and the interference signal 2 are not echo signals of the first communication apparatus, distances obtained based on the beat frequency signal 1 corresponding to the interference signal 1 and the beat frequency signal 3 corresponding to the interference signal 2 are distances to false target objects.

To reduce a probability that the echo signal of the first communication apparatus is interfered, and avoid a phenomenon that a false target object is generated in the sensing process of the first communication apparatus, the sensing signal generated by the first communication apparatus is generally processed in a time division, frequency division, or code division manner.

Processing, in the time division manner, the sensing signal generated by the first communication apparatus specifically includes: The first communication apparatus adjusts start time of chirp signals in different periods based on a randomly generated or preset pseudo-random sequence. In this way, the probability that the echo signal of the first communication apparatus is interfered is reduced in the time division manner. For example, as shown in FIG. 7, when an element of a sequence is 0, the first communication apparatus does not adjust start time of a chirp signal in a corresponding period; or when an element of a sequence is 1, the first communication apparatus prolongs start time of a chirp signal in a corresponding period. However, the time division manner increases a ranging delay.

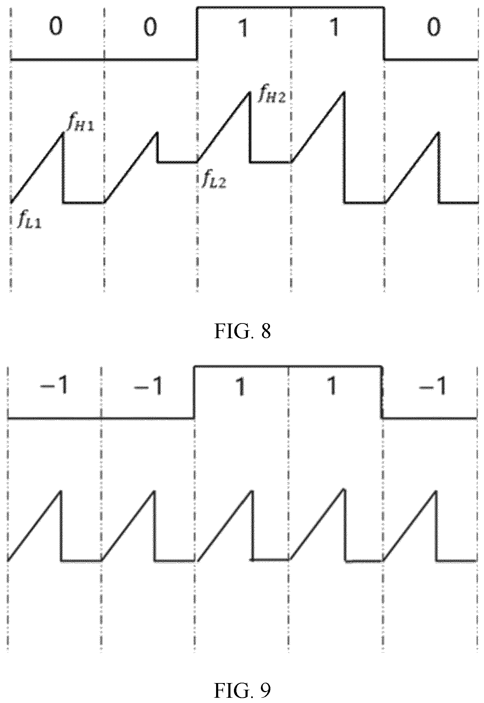

Processing, in the frequency division manner, the sensing signal generated by the first communication apparatus specifically includes: The first communication apparatus adjusts a start frequency of chirp signals in different periods based on a randomly generated or preset pseudo-random sequence. In this way, the probability that the echo signal of the first communication apparatus is interfered is reduced in the time division manner. For example, as shown in FIG. 8, when an element of a sequence is 0, the first communication apparatus does not adjust a start frequency of a chirp signal in a corresponding period; or when an element of a sequence is 1, the first communication apparatus adjusts a start frequency of a chirp signal in a corresponding period from $f_{L1}$ to $f_{L2}$. In this way, a highest frequency of the chirp signal in the period is adjusted from $f_{H1}$ to $f_{H2}$. However, in the frequency division manner, space needs to be reserved for frequency adjustment. Thus, a bandwidth actually occupied by a signal is reduced, thereby reducing a ranging resolution.

Processing, in the code division manner, the sensing signal generated by the first communication apparatus specifically includes: performing phase modulation on chirp signals of different periods by directly using a randomly generated or preset pseudo-random sequence. In this way, the probability that the echo signal of the first communication apparatus is interfered is reduced in the code division manner. For example, as shown in FIG. 9, when an element of a sequence is 1, the first communication apparatus directly sends a generated chirp signal in a corresponding period; or when an element of a sequence is -1, the first communication apparatus performs phase rotation on a chirp signal by 180° in a corresponding period and then sends the chirp signal. In this way, a receive end accumulates beat frequency signals of a plurality of periods and then performs spectrum analysis. Herein, interference is suppressed mainly by using periodic cross-correlation between different pseudo-random sequences used by different apparatuses. However, periodic cross-correlation between existing pseudo-random sequences is relatively poor. Therefore, a capability of suppressing interference to the echo signal of the first communication apparatus in the code division manner is relatively limited. For example, as shown in Table 1, periodic cross-correlation results between common pseudo-random sequences are shown.

**Table 1**

| Length | 15 | 31 | 63 | 127 |
|---|---|---|---|---|
| M sequence | -4.44 dB | -9.11 dB | -8.87 dB | -9.90 dB |
| Gold sequence | -4.44 dB | -10.74 dB | -11.38 dB | -17.47 dB |
| Kasami sequence | -9.54 dB | - | -16.90 dB | - |
| ZC sequence | -11.76 dB | -14.91 dB | -17.99 dB | -21.04 dB |

The periodic cross-correlation value shown in Table 1 is a periodic cross-correlation value between two sequences with a same length and a same type. For example, a periodic cross-correlation value between two M sequences with a length 0f 15 is -4.44 dB.

It should be noted that, first, a periodic cross-correlation result between sequences shown in Table 1 is a relative value in a unit of decibel (decibel, dB). For example, a periodic cross-correlation result between two sequences in a unit of decibel may be equal to $20 \times \log_{10}|$periodic cross-correlation peak$|$. Second, because a Kasami sequence has no length of 31 or 127, "-" in Table 1 indicates that there is no periodic cross-correlation value.

Therefore, this application provides a sensing method. In the sensing method, a sensing signal sent by a communication apparatus is generated based on a preset sequence. Therefore, in a sensing process of the communication apparatus, the sensing signal may suppress interference of a signal transmitted by another communication apparatus, so that the communication apparatus has a relatively strong interference suppression capability. In this way, a phenomenon that a false target object is generated by the communication apparatus can be avoided, thereby improving sensing reliability of the communication apparatus. In addition, the ranging delay is not increased, and the bandwidth actually occupied by the signal is not reduced to reduce the ranging resolution.

It should be noted that the sensing signal in this embodiment of this application is not limited to an FMCW signal, and may alternatively be another type of signal. For example, the sensing signal may be a cyclic prefix orthogonal frequency division multiplexing (cyclic prefix orthogonal frequency division multiplexing, CP-OFDM) signal, a discrete Fourier transform spread orthogonal frequency division multiplexing (discrete fourier transform spread orthogonal frequency division multiplexing, DFT-s-OFDM) signal, or a single carrier (single carrier, SC) signal. This is not limited in this application.

In addition, the communication apparatus in this application may have only a sensing system, or may have a joint communication and sensing (joint communication and sensing, JCS) system. This is not limited in this application.

When the communication apparatus has a JCS system, the JCS system includes two parts: a communication system and a sensing system, and the two parts reuse a same system architecture, hardware facility, and spectrum resource. The communication system may also use a DFT-s-OFDM signal. Therefore, to reduce interference between the sensing system and the communication system, resource reuse is usually performed in a time division or frequency division manner. For example, resource reuse is performed in the time division manner, that is, only a sensing signal in the sensing system or a communication signal in the communication system is sent at a same time domain location, and the signal sent at the time domain location occupies all bandwidths configured in frequency domain. Based on this manner, the sensing signal may occupy all the configured bandwidths. In other words, compared with frequency division multiplexing, the bandwidth occupied by the sensing signal can be increased, thereby increasing a ranging resolution of the sensing system.

Optionally, when resource reuse is performed in the time division manner, a specific multiplexing manner or a resource allocation manner may be implemented by using a transport layer protocol or a network layer protocol. For example, a plurality of consecutive DFT-s-OFDM symbols may be used for the sensing system, and other symbols may be used for the communication system. Alternatively, a plurality of DFT-s-OFDM symbols allocated to the sensing system may be inconsecutive. A multiplexing manner is not specifically limited in this application.

The following describes in detail the sensing method provided in this application with reference to specific accompanying drawings.

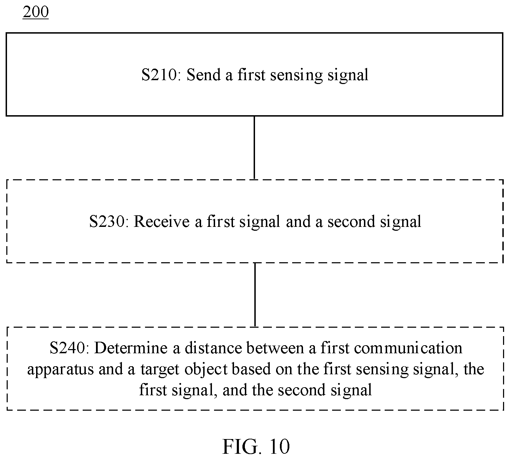

FIG. 10 is a schematic flowchart of an example of a sensing method 200 according to an embodiment of this application.

It should be noted that the sensing method 200 shown in FIG. 10 may be applied to the first communication apparatus and/or the second communication apparatus shown in FIG. 1. The following uses an example in which the sensing method 200 is applied to the first communication apparatus for description, which shall not constitute a limitation on this application.

For example, as shown in FIG. 10, the sensing method 200 includes S210. The following describes S210 in detail.

S210: The first communication apparatus sends a first sensing signal.

The first sensing signal includes first sub-signals in N periods, a first sub-signal in an $n^{th}$ period is a signal obtained by performing phase modulation on a second sub-signal based on an $n^{th}$ element in a first sequence, N is a positive integer greater than 0, n=1, 2, ..., N, and the first sequence is a binary sequence that includes N elements.

For example, the second sub-signal may include but is not limited to an FMCW signal, a CP-OFDM signal, a DFT-s-OFDM signal, or an SC signal.

It should be understood that the second sub-signal in this application may be understood as an original signal that is not phase modulated.

It should be noted that phase modulation does not affect a type of a signal, that is, a type of the second sub-signal is the same as a type of the first sensing signal. For example, if the second sub-signal is an FMCW signal, the first sensing signal is also an FMCW signal; or if the second sub-signal is a CP-OFDM signal, the first sensing signal is also a CP-OFDM signal; or if the second sub-signal is a DFT-s-OFDM signal, the first sensing signal is also a DFT-s-OFDM signal; or if the second sub-signal is an SC signal, the first sensing signal is also an SC signal.

A binary sequence in this application may be understood as that the sequence includes two elements. For example, preset sequences in the following examples in Table 1 and Table 2 each include two elements: 1 and -1.

When N=8, the first sequence is any one of a first preset sequence, a second preset sequence, a third preset sequence, and a fourth preset sequence, or the first sequence is a sequence obtained by performing cyclic shift on any one of a first preset sequence, a second preset sequence, a third preset sequence, and a fourth preset sequence.

In an example, the first preset sequence, the second preset sequence, the third preset sequence, and the fourth preset sequence may be shown in Table 2.

**Table 2**

| First preset sequence | $\{1, 1, 1, 1, 1, 1, 1, 1\}$ (denoted as $S_0$) |
|---|---|

(continued)

| Second preset sequence | {1, -1, 1, -1, 1, -1, 1, -1} (denoted as $S_1$) |
|---|---|
| Third preset sequence | {1, -1, -1, 1, 1, -1, -1, 1} (denoted as $S_2$) |
| Fourth preset sequence | {1, -1, -1, -1, -1, 1, 1, 1} (denoted as $S_3$), or {1, -1, 1, 1, -1, 1, -1, -1} (denoted as $S_4$) |

When N=16, the first sequence is any one of a fifth preset sequence, a sixth preset sequence, a seventh preset sequence, an eighth preset sequence, and a ninth preset sequence, or the first sequence is a sequence obtained by performing cyclic shift on any one of a fifth preset sequence, a sixth preset sequence, a seventh preset sequence, an eighth preset sequence, and a ninth preset sequence.

In an example, the fifth preset sequence, the sixth preset sequence, the seventh preset sequence, the eighth preset sequence, and the ninth preset sequence may be shown in Table 3.

**Table 3**

| Fifth preset sequence | {1, 1, 1, 1, 1, 1, 1, 1, 1, 1, 1, 1, 1, 1, 1, 1} (denoted as $S_0'$) |
|---|---|
| Sixth preset sequence | {1, -1, 1, -1, 1, -1, 1, -1, 1, -1, 1, -1, 1, -1, 1, -1} (denoted as $S_1'$) |
| Seventh preset sequence | {1, 1, -1, -1, 1, 1, -1, -1, 1, 1, -1, -1, 1, 1, -1, -1} (denoted as $S_2'$) |
| Eighth preset sequence | {1, 1, 1, -1, -1, -1, -1, 1, 1, 1, 1, -1, -1, -1, -1, 1} (denoted as $S_3'$) or {1, 1, -1, 1, -1, -1, 1, -1, 1, 1, -1, 1, -1, -1, 1, -1} (denoted as $S_4'$) |
| Ninth preset sequence | {1, -1, 1, 1, -1, -1, -1, 1, -1, 1, -1, -1, 1, 1, 1, -1} (denoted as $S_5'$) or {1, -1, -1, -1, 1, 1, -1, 1, -1, 1, 1, 1, -1, -1, 1, -1} (denoted as $S_6'$) or {1, 1, 1, -1, 1, 1, 1, -1, -1, -1, -1, 1, -1, -1, -1, 1} (denoted as $S_7'$) or {1, -1, -1, 1, 1, -1, 1, -1, -1, 1, 1, -1, -1, 1, -1, 1} (denoted as $S_8'$) or {1, 1, 1, 1, 1, -1, -1, -1, -1, -1, -1, -1, -1, 1, 1, 1} (denoted as $S_9'$) or {1, 1, 1, -1, 1, -1, -1, -1, -1, -1, -1, 1, -1, 1, 1, 1} (denoted as $S_{10}'$) or {1, -1, 1, 1, -1, -1, -1, -1, -1, 1, -1, -1, 1, 1, 1, 1} (denoted as $S_{11}'$) or {1, -1, -1, -1, -1, -1, 1, 1, -1, 1, 1, 1, 1, 1, -1, -1} (denoted as $S_{12}'$) or {1, -1, 1, 1, 1, 1, -1, 1, -1, 1, -1, -1, -1, 1, -1} (denoted as $S_{13}'$) or {1, -1, -1, -1, 1, 1, -1, -1, 1, 1, 1, 1, -1, -1, 1} (denoted as $S_{14}'$) or {1, -1, -1, -1, -1, 1, 1, 1, -1, 1, 1, 1, 1, -1, -1, -1} (denoted as $S_{15}'$) or {1, 1, 1, -1, 1, 1, -1, 1, -1, -1, -1, 1, -1, -1, 1, -1} (denoted as $S_{16}'$) or {1, -1, 1, 1, -1, 1, 1, 1, -1, 1, -1, -1, 1, -1, -1, -1} (denoted as $S_{17}'$) or {1, -1, -1, -1, 1, 1, 1, -1, -1, 1, 1, 1, -1, -1, -1, 1} (denoted as $S_{18}'$) or {1, -1, 1, 1, -1, -1, 1, -1, -1, 1, -1, -1, 1, 1, -1, 1} (denoted as $S_{19}'$) or {1, -1, 1, -1, 1, 1, -1, 1, -1, 1, -1, 1, -1, -1, 1, -1} (denoted as $S_{20}'$) |

It should be noted that first, Table 2 is an example of the first to the fourth preset sequences, and should not constitute a limitation on this application. For example, in an example, the first to the fourth preset sequences may alternatively be $W_1$ times of each element in corresponding first to fourth preset sequences shown in Table 1. For example, $W_1$ may be -1, 2, or the like. A value of $W_1$ is not limited in this application.

In addition, Table 3 is an example of the fifth to the ninth preset sequences, and should not constitute a limitation on this application. For example, in an example, the fifth to the ninth preset sequences may alternatively be $W_2$ times of each element in corresponding fifth to ninth preset sequences shown in Table 2. For example, $W_2$ may be -1 or 2. A value of $W_2$ is not limited in this application.

Second, Table 2 is described by using an example in which a quantity N of elements included in the preset sequence is 8, and Table 3 is described by using an example in which the quantity N of elements included in the preset sequence is 16. This should not constitute a limitation on this application. For example, in addition to 8 and 16, N may be 32, 64, ..., $2^m$, where m is an integer greater than or equal to 3.

Third, for ease of description, $S_j'(i)$ or $S_j'[i]$ is denoted as an $i^{th}$ element in $S_j'$, where j=0, 1, ..., 20, and i=0, 1, ..., 15.

Optionally, before the first communication apparatus performs S210, the first communication apparatus further needs to generate the first sensing signal. For a specific step in which the first communication apparatus generates the first sensing signal, refer to the following description of a method 300. Details are not described herein again.

Optionally, in some embodiments, a communication system may further include at least one second communication apparatus. In this case, the second communication apparatus may perform S220. The following describes S220 in detail.

It should be noted that a quantity of second communication apparatuses is not limited in this embodiment of this application. When there are a plurality of second communication apparatuses, each second communication apparatus may perform S220.

S220: The second communication apparatus sends a second sensing signal.

The second sensing signal includes third sub-signals in N periods, a third sub-signal in an $n^{th}$ period is a signal obtained by performing phase modulation on the second sub-signal based on an $n^{th}$ element in a second sequence, and the second sequence is a binary sequence that includes N elements. That is, the second sensing signal sent by the second communication apparatus and the first sensing signal sent by the first communication apparatus are sensing signals obtained by performing phase modulation on a same signal (the second sub-signal) based on different sequences. In addition, because both the second sensing signal and the first sensing signal are signals obtained by performing phase modulation on the second sub-signal, types of the second sensing signal, the first sensing signal, and the second sub-signal are the same. A maximum periodic cross-correlation value between the second sequence and the first sequence is 0. In other words, the second sequence and the first sequence are cyclically orthogonal. In this case, the second sequence and the first sequence have perfect periodic cross-correlation.

Optionally, in an example, the maximum periodic cross-correlation value between the second sequence and the first sequence is 0, and an absolute value of a maximum aperiodic cross-correlation value between the second sequence and the first sequence is also less than or equal to a threshold. In this case, the second sequence and the first sequence not only have perfect periodic cross-correlation properties, but also have relatively good aperiodic cross-correlation properties.

A specific value of the threshold described above is not limited in this application.

For example, if the second sequence and the first sequence are two different sequences shown in Table 2, the absolute value of the maximum aperiodic cross-correlation value between the second sequence and the first sequence is less than or equal to 0.375 (as shown in Table 5).

For another example, if the second sequence and the first sequence are two different sequences shown in Table 3, the absolute value of the maximum aperiodic cross-correlation value between the second sequence and the first sequence is less than or equal to 0.25 (as shown in Table 7).

When N=8, the second sequence is any one of the first preset sequence, the second preset sequence, the third preset sequence, and the fourth preset sequence, or the second sequence is a sequence obtained by performing cyclic shift on any one of the first preset sequence, the second preset sequence, the third preset sequence, and the fourth preset sequence. In addition, the second sequence and the first sequence are different preset sequences. Herein, the first to the fourth preset sequences are the first to the fourth preset sequences described in S210.

In an example, if the first to the third preset sequences are shown in Table 2, and the fourth preset sequence is $S_3$ shown in Table 2, a maximum periodic cross-correlation result of different preset sequences in the first to the fourth preset sequences is shown in Table 4, and a maximum aperiodic cross-correlation result is shown in Table 5.

In this example, there may be one to three second communication apparatuses.

**Table 4**

| Serial number | $S_0$ | $S_1$ | $S_2$ | $S_3$ |
|---|---|---|---|---|
| $S_0$ | - | 0 | 0 | 0 |
| $S_1$ | 0 | - | 0 | 0 |
| $S_2$ | 0 | 0 | - | 0 |
| $S_3$ | 0 | 0 | 0 | - |

**Table 5**

| Serial number | $S_0$ | $S_1$ | $S_2$ | $S_3$ |
|---|---|---|---|---|
| $S_0$ | - | 0.125 | 0.125 | 0.375 |
| $S_1$ | 0.125 | - | 0.25 | 0.25 |
| $S_2$ | 0.125 | 0.25 | - | 0.25 |
| $S_3$ | 0.375 | 0.25 | 0.25 | - |

It can be learned from Table 4 that maximum cross-correlation results of the first to the fourth preset sequences are all 0. In this case, the first to the fourth preset sequences have perfect periodic cross-correlation. It can be learned from Table 5 that absolute values of maximum aperiodic cross-correlation values of the first to the fourth preset sequences are less than or equal to 0.375.

When N=16, the second sequence is any one of the fifth preset sequence, the sixth preset sequence, the seventh preset sequence, the eighth preset sequence, and the ninth preset sequence, or the second sequence is a sequence obtained by performing cyclic shift on any one of the fifth preset sequence, the sixth preset sequence, the seventh preset sequence, the eighth preset sequence, and the ninth preset sequence. In addition, the second sequence and the first sequence are different preset sequences. Herein, the fifth to the ninth preset sequences are the fifth to the ninth preset sequences described in S210.

In this example, if the fifth to the seventh preset sequences are shown in Table 3, the eighth preset sequence is $S_3'$ shown in Table 3, and the ninth preset sequence is $S_5'$ shown in Table 3, a maximum periodic cross-correlation result of different preset sequences in the fifth to the ninth preset sequences is shown in Table 6, and a maximum aperiodic cross-correlation result is shown in Table 7.

In this example, there may be one to four second communication apparatuses.

**Table 6**

| Serial number | $S_0'$ | $S_1'$ | $S_2'$ | $S_3'$ | $S_5'$ |
|---|---|---|---|---|---|
| $S_0'$ | - | 0 | 0 | 0 | 0 |
| $S_1'$ | 0 | - | 0 | 0 | 0 |
| $S_2'$ | 0 | 0 | - | 0 | 0 |
| $S_3'$ | 0 | 0 | 0 | - | 0 |
| $S_5'$ | 0 | 0 | 0 | 0 | - |

**Table 7**

| Serial number | $S_0'$ | $S_1'$ | $S_2'$ | $S_3'$ | $S_5'$ |
|---|---|---|---|---|---|
| $S_0'$ | - | 0.0625 | 0.125 | 0.1875 | 0.125 |
| $S_1'$ | 0.0625 | - | 0.0625 | 0.125 | 0.1875 |
| $S_2'$ | 0.125 | 0.0625 | - | 0.1875 | 0.25 |
| $S_3'$ | 0.1875 | 0.25 | 0.1875 | - | 0.25 |
| $S_5'$ | 0.125 | 0.1875 | 0.25 | 0.25 | - |

It can be learned from Table 6 that maximum cross-correlation results of the fifth to the ninth preset sequences are all 0. In this case, the fifth to the ninth preset sequences have perfect periodic cross-correlation. It can be learned from Table 7 that absolute values of maximum aperiodic cross-correlation values of the fifth to the ninth preset sequences are less than or equal to 0.25. Optionally, before the second communication apparatus performs S220, the second communication apparatus further needs to generate the second sensing signal. For a specific step in which the second communication apparatus generates the second sensing signal, refer to the following description of the method 300. Details are not described herein again.

It should be noted that a sequence of performing S220 and S210 is not limited in this application. For example, S220 may be performed before S210, or S220 may be performed before S210, or S220 and S210 may be performed simultaneously.

Optionally, in some embodiments, as shown in FIG. 10, after S210, the first communication apparatus may further perform S230. The following describes S230 in detail.

S230: The first communication apparatus receives a first signal and a second signal.

The first signal is a signal obtained by reflecting the first sensing signal by a target object. In other words, the first signal is an echo signal obtained by reflecting the first sensing signal by the target object. For example, the first signal may include the echo signal shown in FIG. 1.

The second signal includes the second sensing signal and/or a signal obtained by reflecting the second sensing signal by the target object.

It should be understood that, because the first signal is the signal obtained by reflecting the first sensing signal by the target object, and the second sensing signal is transmitted by the second communication apparatus, the second signal may be considered as an interference signal of the first signal.

When the second signal includes the second sensing signal, it may be considered that the second signal includes a direct-transmission interference signal generated by the second communication apparatus. In this case, the second sensing signal generated by the second communication apparatus is directly transmitted to the first communication apparatus. For example, the second signal may include the interference signal 1 shown in FIG. 1.

When the second signal includes the signal obtained by reflecting the second sensing signal by the target object, it may be considered that the second signal includes a reflection interference signal generated by the second communication apparatus. In this case, the second sensing signal generated by the second communication apparatus is reflected to the first communication apparatus only after passing through the target object. For example, the second signal may include the interference signal 2 shown in FIG. 1.

It should be noted that when the second signal includes the second sensing signal and the signal obtained by reflecting the second sensing signal by the target object, a sequence in which the first communication apparatus receives the second sensing signal and the signal obtained by reflecting the second sensing signal by the target object is not limited in this application. For example, the first communication apparatus may first receive the second sensing signal, and then receive the signal obtained by reflecting the second sensing signal by the target object. Alternatively, the first communication apparatus may first receive the signal obtained by reflecting the second sensing signal by the target object, and then receive the second sensing signal. Alternatively, the first communication apparatus may simultaneously receive the second sensing signal and the signal obtained by reflecting the second sensing signal by the target object.

A sequence in which the first communication apparatus receives the first signal and the second signal is not limited in this application. For example, the first communication apparatus may first receive the first signal, and then receive the second signal. Alternatively, the first communication apparatus may first receive the second signal, and then receive the first signal. Alternatively, the first communication apparatus may simultaneously receive the first signal and the second signal.

In addition, because both the first signal and the second signal include sub-signals of N periods, the foregoing sequence in which the first communication apparatus receives the first signal and the second signal may be a sequence in which the first communication apparatus receives the first signal and the second signal in each of the N periods, or may be a sequence in which the first communication apparatus receives the first signal and the second signal for the first time in the N periods. This is not limited in this embodiment of this application.

Optionally, as shown in FIG. 10, after S230, the first communication apparatus may further perform S240.

S240: Determine a distance between the first communication apparatus and the target object based on the first sensing signal, the first signal, and the second signal.

It can be learned from the foregoing descriptions of the first sensing signal and the second sensing signal that both the first sensing signal and the second sensing signal are signals obtained by performing phase modulation on the second sub-signal. In other words, the first sensing signal and the second sensing signal use the same second sub-signal. A difference between the two is that sequences for performing phase modulation on the second sub-signal are different. For example, the first sensing signal uses the first sequence, and the second sensing signal uses the second sequence. Therefore, the first communication apparatus cannot directly distinguish which of the first signal and the second signal is an echo signal and which of the first signal and the second signal is an interference signal. Therefore, in S240, the first communication apparatus determines the distance between the first communication apparatus and the target object not only based on the first sensing signal and the first signal, but also based on the first sensing signal and the second signal.

For example, first, the first communication apparatus performs frequency mixing separately and low-pass filtering on the first sensing signal and each of the first signal and the second signal, to obtain a first beat frequency signal and a second beat frequency signal. Second, spectrum analysis is performed on the first beat frequency signal and the second beat frequency signal separately to obtain a frequency of the first beat frequency signal and a frequency of the second beat frequency signal. Finally, the distance between the first communication apparatus and the target object may be calculated based on the frequency of the first beat frequency signal and the frequency of the second beat frequency signal.

The following separately uses Example 1 and Example 2 as examples to describe how the first communication apparatus determines the distance between the first communication apparatus and the target object by using the sensing method 200.

It should be noted that in both Example 1 and Example 2, the following assumptions are made:

(1) The distance between the first communication apparatus and the target object is 50 m, a distance between the second communication apparatus and the first communication apparatus is 60 m, and a path length of an interference signal of the second communication apparatus reflected by the target object is 120 m.

(2) The first communication apparatus performs phase modulation on the second sub-signal by using $S_0{}'$ (an example of the first sequence) shown in Table 3, and the second communication apparatus performs phase modulation on the second sub-signal by using $S_1{}'$ (an example of the second sequence) shown in Table 3. In this case, N=16.

*(3)* $x_{c1}(t)$ is a beat frequency signal obtained through frequency mixing and low-pass filtering are performed the first sensing signal that is not phase modulated and the interference signal 1 that is not phase modulated; $x_{BF}(t)$ is a beat frequency signal obtained through frequency mixing and low-pass filtering are performed on the first sensing signal that is not phase modulated and the echo signal that is not phase modulated; and $x_{c2}(t)$ is a beat frequency signal obtained through frequency mixing and low-pass filtering are performed on the first sensing signal that is not phase modulated and the interference signal 2 that is not phase modulated.

Differences between Example 1 and Example 2 are as follows:

In Example 1, before the first communication apparatus senses the target object, the second communication apparatus has already been sensing the target object (for example, the following uses an example in which the second communication apparatus has sent second sensing signals of two periods). In this way, the first communication apparatus receives the interference signal of the second communication apparatus in all 16 periods.

In Example 2, the second communication apparatus does not start to sense the target object until in a period (for example, the 15th period is used as an example below) of the 16 periods in which the first communication apparatus senses the target object. In this way, in the first 14 periods, the first communication apparatus does not receive the interference signal of the second communication apparatus, and only in the last two periods, that is, the 15th period and the 16th period, the first communication apparatus receives the interference signal of the second communication apparatus.

Example 1

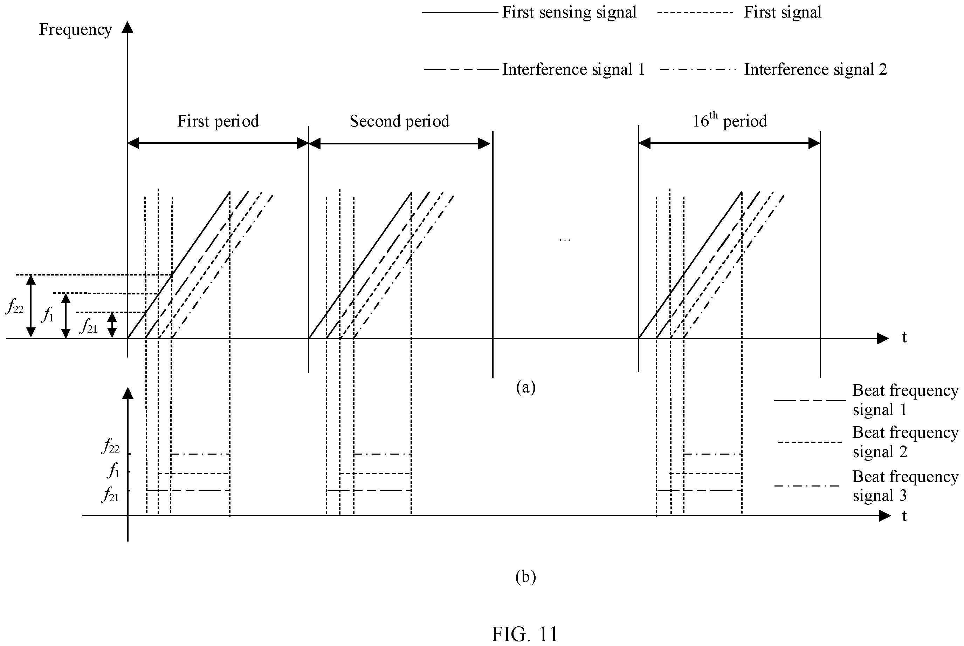

FIG. 11 is a diagram of the first sensing signal sent by and signals received by the first communication apparatus in frequency domain in Example 1.

For example, as shown in (a) in FIG. 11, in a period, first, the first communication apparatus transmits the first sensing signal, then the first communication apparatus receives the interference signal 1 (an example of the second sensing signal transmitted by the second communication apparatus), then the first communication apparatus receives the first signal generated by reflecting, by the target object, the first sensing signal transmitted by the first communication apparatus, and finally, the first communication apparatus receives the interference signal 2 (an example of the signal generated by reflecting, by the target object, the second sensing signal transmitted by the second communication apparatus).

Therefore, after the first communication apparatus receives echo signals and interference signals within the 16 periods, a process of performing ranging includes:

Step 1: For each period in the 16 periods, separately perform frequency mixing and low-pass filtering on the first sensing signal that is not phase modulated and the first signal and the second signal that are phase modulated, to obtain corresponding beat frequency signals.

For example, frequency mixing and low-pass filtering are performed on the first sensing signal that is not phase modulated and the interference signal 1 that is phase modulated, to obtain signals of the beat frequency signal 1 in the 16 periods, which are sequentially as follows:

$$S_1{}'(2)x_{c1}(t), S_1{}'(3)x_{c1}(t), \cdots S_1{}'(15)x_{c1}(t), S_1{}'(0)x_{c1}(t), S_1{}'(1)x_{c1}(t)$$.

Frequency mixing and low-pass filtering are performed on the first sensing signal that is not phase modulated and the first signal that is phase modulated, to obtain signals of the beat frequency signal 2 in the 16 periods, which are sequentially as follows:

$$S_0{}'(0)x_{BF}(t), S_0{}'(1)x_{BF}(t), \cdots S_0{}'(15)x_{BF}(t)$$.

Frequency mixing and low-pass filtering are performed on the first sensing signal that is not phase modulated and the interference signal 2 that is not phase modulated, to obtain signals of the beat frequency signal 3 in the 16 periods, which are sequentially as follows:

$$S_1{}'(2)x_{c2}(t), S_1{}'(3)x_{c2}(t), \cdots, S_1{}'(15)x_{c2}(t), S_1{}'(0)x_{c2}(t), S_1{}'(1)x_{c2}(t)$$.

Step 2: Based on the sequence used by the first sensing signal, perform phase demodulation on the beat frequency signals obtained through frequency mixing and low-pass filtering in step 1, to obtain corresponding beat frequency signals.

For example, based on $S_0$' (an example of the first sequence), phase demodulation is performed on the beat frequency signal 1 obtained in step 1, to obtain signals of the phase-demodulated beat frequency signal 1 in the 16 periods, which are sequentially as follows:

$$S_0{}'(0)S_1{}'(2)x_{c1}(t), S_0{}'(1)S_1{}'(3)x_{c1}(t), \cdots S_0{}'(13)S_1{}'(15)x_{c1}(t), S_0{}'(14)S_1{}'(0)x_{c1}(t), S_0{}'(15)S_1{}'(1)x_{c1}(t).$$

Based on $S_0$' (an example of the first sequence), phase demodulation is performed on the beat frequency signal 2 obtained in step 1, to obtain signals of the phase-demodulated beat frequency signal 2 in the 16 periods, which are sequentially as follows:

$$S_0{}'(0)S_0{}'(0)x_{BF}(t), S_0{}'(1)S_0{}'(1)x_{BF}(t), \cdots S_0{}'(15)S_0{}'(15)x_{BF}(t).$$

Based on $S_0$' (an example of the first sequence), phase demodulation is performed on the beat frequency signal 3 obtained in step 1, to obtain signals of the phase-demodulated beat frequency signal 3 in the 16 periods, which are sequentially as follows:

$$S_0{}'(0)S_1{}'(2)x_{c2}(t), S_0{}'(1)S_1{}'(3)x_{c2}(t), \cdots, S_0{}'(13)S_1{}'(15)x_{c2}(t), S_0{}'(14)S_1{}'(0)x_{c2}(t), S_0{}'(15)S_1{}'(1)x_{c2}(t).$$

Step 3: Accumulate signals of each phase-demodulated beat frequency signal in the 16 periods obtained in step 2.

For example, after the signals of the phase-demodulated beat frequency signal 1 in the 16 periods obtained in step 2 are accumulated, the following is obtained:

$$S_0{}'(0)S_1{}'(2)x_{c1}(t) + S_0{}'(1)S_1{}'(3)x_{c1}(t) + \cdots + S_0{}'(13)S_1{}'(15)x_{c1}(t) + S_0{}'(14)S_1{}'(0)x_{c1}(t) + $$
$$S_0{}'(15)S_1{}'(1)x_{c1}(t)$$

After the signals of the phase-demodulated beat frequency signal 2 in the 16 periods are accumulated, the following is obtained:

$$S_0{}'(0)S_0{}'(0)x_{BF}(t) + S_0{}'(1)S_0{}'(1)x_{BF}(t) + \cdots + S_0{}'(15)S_0{}'(15)x_{BF}(t)$$

For example, after the signals of the phase-demodulated beat frequency signal 3 in the 16 periods obtained in step 2 are accumulated, the following is obtained:

$$S_0{}'(0)S_1{}'(2)x_{c2}(t) + S_0{}'(1)S_1{}'(3)x_{c2}(t) + \cdots + S_0{}'(13)S_1{}'(15)x_{c2}(t)$$
$$+ S_0{}'(14)S_1{}'(0)x_{c2}(t) + S_0{}'(15)S_1{}'(1)x_{c2}(t)$$

According to Table 6, it can be learned that a maximum periodic cross-correlation value between $S_0$' and $S_1$' is 0, that is, $S_0$' and $S_1$' have perfect periodic cross-correlation properties. Therefore, a result of accumulating the signals of the phase-modulated beat frequency signal 1 in the 16 periods in step 3 is 0, and a result of accumulating the signals of the phase-modulated beat frequency signal 3 in the 16 periods in step 3 is 0. In this way, the beat frequency signal 1 generated by the interference signal 1 and the beat frequency signal 3 generated by the interference signal 2 are eliminated. Finally, the first communication apparatus only needs to perform spectrum analysis on the beat frequency signal 2 generated by the first signal, to obtain the distance between the target object and the first communication apparatus, and a quantity of the distances is only one.

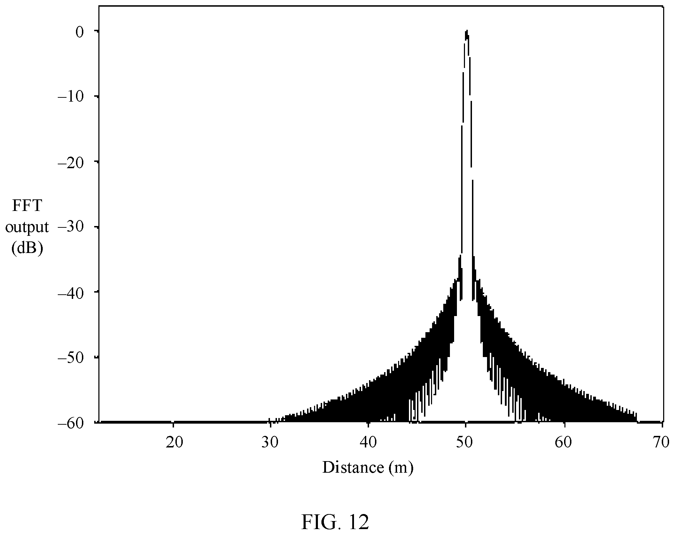

For example, FIG. 12 shows a result of measuring the distance between the target object and the first communication apparatus that is obtained based on the echo signals in the 16 periods described in Example 1. It can be learned from FIG. 12 that there is one distance between the target object and the first communication apparatus, and the distance is 50 m.

In Example 1, before the first communication apparatus senses the target object, the second communication apparatus has already been sensing the target object. In other words, the first communication apparatus receives the interference signal of the second communication apparatus in all the 16 periods. However, because the first sequence and the second sequence have perfect periodic correlation, in the 16 periods, the first communication apparatus may eliminate the beat frequency signal generated by the interference signal. Finally, the first communication apparatus performs spectrum analysis only on the beat frequency signal generated by the echo signal, so as to obtain the distance between the target object and the first communication apparatus, and the quantity of the distances is only one. In this way, the first communication apparatus can perfectly suppress interference caused by the second sensing signal transmitted by the second communication apparatus to a sensing process of the first communication apparatus. Further, an interference suppression capability of the first communication apparatus is further enhanced, and sensing reliability of the first communication apparatus is improved.

Example 2

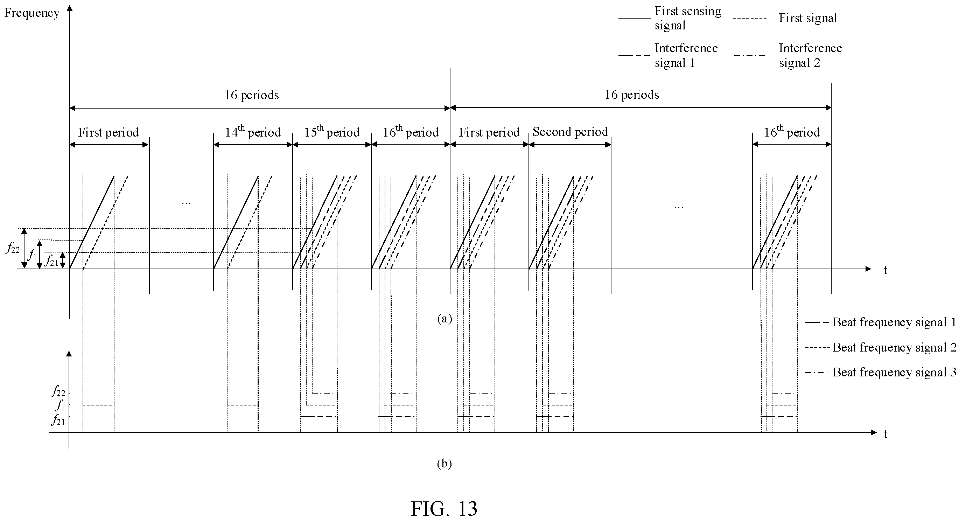

FIG. 13 is a diagram of the first sensing signal sent by and signals received by the first communication apparatus in frequency domain in Example 2.

For example, as shown in (a) in FIG. 13, in each of the first 14 periods of the first 16 periods, the first communication apparatus first transmits the first sensing signal, and then receives the first signal generated by reflecting, by the target object, the first sensing signal transmitted by the first communication apparatus. In each period of the last two periods (the 15th period and the 16th period) of the first 16 periods and each period of the second 16 periods, first, the first communication apparatus transmits the first sensing signal, then the first communication apparatus receives the interference signal 1 (an example of the second sensing signal transmitted by the second communication apparatus), then the first communication apparatus receives the first signal generated by reflecting, by the target object, the first sensing signal transmitted by the first communication apparatus, and finally, the first communication apparatus receives the interference signal 2 (an example of the signal generated by reflecting, by the target object, the second sensing signal transmitted by the second communication apparatus).

Therefore, after the first communication apparatus receives echo signals and interference signals within the first 16 periods, a process of performing ranging includes:

Step 1: For each period in the first 16 periods, separately perform frequency mixing and low-pass filtering on the first sensing signal that is not phase modulated and the first signal and the second signal that are phase modulated, to obtain corresponding beat frequency signals.

For example, in each period of the last two periods (the 15th period and the 16th period) of the first 16 periods, frequency mixing and low-pass filtering are performed on the first sensing signal that is not phase modulated and the interference signal 1 that is phase modulated, to obtain signals of the beat frequency signal 1 in the last two periods of the first 16 periods, which are sequentially as follows:

$$S_1{}'(0)x_{c1}(t), S_1{}'(1)x_{c1}(t) .$$

In each period of the first 16 periods, frequency mixing and low-pass filtering are performed on the first sensing signal that is not phase modulated and the first signal that is phase modulated, to obtain signals of the beat frequency signal 2 in the first 16 periods, which are sequentially as follows:

$$S_0{}'(0)x_{BF}(t), S_0{}'(1)x_{BF}(t), \cdots S_0{}'(15)x_{BF}(t) .$$

In each period of the last two periods (the 15th period and the 16th period) of the first 16 periods, frequency mixing and low-pass filtering are performed on the first sensing signal that is not phase modulated and the interference signal 2 that is phase modulated, to obtain signals of the beat frequency signal 3 in the last two periods (the 15th period and the 16th period) of the first 16 periods, which are sequentially as follows:

$$S_1{}'(0)x_{c2}(t), S_1{}'(1)x_{c2}(t) .$$

Step 2: Based on the sequence used by the first sensing signal, perform phase demodulation on the beat frequency signals obtained through frequency mixing and low-pass filtering in step 1, to obtain corresponding beat frequency signals.

For example, based on $S_0{}'$ (an example of the first sequence), phase demodulation is performed on the beat frequency signal 1 obtained in step 1, to obtain signals of the phase-demodulated beat frequency signal 1 in the last two periods (the 15th period and the 16th period) of the first 16 periods, which are sequentially as follows:

$$S_0{}'(14)S_1{}'(0)x_{c1}(t), S_0{}'(15)S_1{}'(1)x_{c1}(t) .$$

Based on $S_0$' (an example of the first sequence), phase demodulation is performed on the beat frequency signal 2 obtained in step 1, to obtain signals of the phase-demodulated beat frequency signal 1 in the 16 periods, which are sequentially as follows:

$$S_0'(0)S_0'(0)x_{BF}(t), S_0'(1)S_0'(1)x_{BF}(t), \cdots, S_0'(15)S_0'(15)x_{BF}(t).$$

Based on $S_0$' (an example of the first sequence), phase demodulation is performed on the beat frequency signal 3 obtained in step 1, to obtain signals of the phase-demodulated beat frequency signal 3 in the last two periods (the 15th period and the 16th period) of the first 16 periods, which are sequentially as follows:

$$S_0'(14)S_1'(0)x_{c2}(t), S_0'(15)S_1'(1)x_{c2}(t).$$

Step 3: Accumulate signals of each phase-demodulated beat frequency signal in the 16 periods obtained in step 2.

For example, after the signals of the phase-demodulated beat frequency signal 1 in the 16 periods obtained in step 2 are accumulated, the following is obtained:

$$S_0'(14)S_1'(0)x_{c1}(t) + S_0'(15)S_1'(1)x_{c1}(t)$$

For example, after the signals of the phase-demodulated beat frequency signal 2 in the 16 periods obtained in step 2 are accumulated, the following is obtained:

$$S_0'(0)S_0'(0)x_{BF}(t) + S_0'(1)S_0'(1)x_{BF}(t) + \cdots + S_0'(15)S_0'(15)x_{BF}(t)$$

For example, after the signals of the phase-demodulated beat frequency signal 3 in the 16 periods obtained in step 2 are accumulated, the following is obtained:

$$S_0'(14)S_1'(0)x_{c2}(t) + S_0'(15)S_1'(1)x_{c2}(t)$$

According to Table 7, it can be learned that a maximum aperiodic cross-correlation value between $S_0$' and $S_1$' is 0.0625, that is, $S_0$' and $S_1$' have relatively good aperiodic cross-correlation properties. Therefore, a result of accumulating the signals of the phase-modulated beat frequency signal 1 in the 16 periods in step 3 is less than or equal to 0.0625, and a result of accumulating the signals of the phase-modulated beat frequency signal 3 in the 16 periods in step 3 is less than or equal to 0.0625. In this way, the beat frequency signal 1 generated by the interference signal 1 and the beat frequency signal 3 generated by the interference signal 2 cause relatively small interference to the first communication apparatus in the last two periods (the 15th period and the 16th period) of the first 16 periods. In this way, the first communication apparatus finally obtains three distances between the target object and the first communication apparatus. Specifically, a process of obtaining the first distance includes: performing spectrum analysis on the beat frequency signal 1 generated by the interference signal 1 in the last two periods (the 15th period and the 16th period) of the first 16 periods, so as to obtain the distance between the target object and the first communication apparatus. A process of obtaining the second distance includes: performing spectrum analysis on the beat frequency signal 2 generated by the first signal in the first 16 periods, so as to obtain the distance between the target object and the first communication apparatus. A process of obtaining the third distance includes: performing spectrum analysis on the beat frequency signal 3 generated by the interference signal 2 in the last two periods (the 15th period and the 16th period) of the first 16 periods, so as to obtain the distance between the target object and the first communication apparatus.

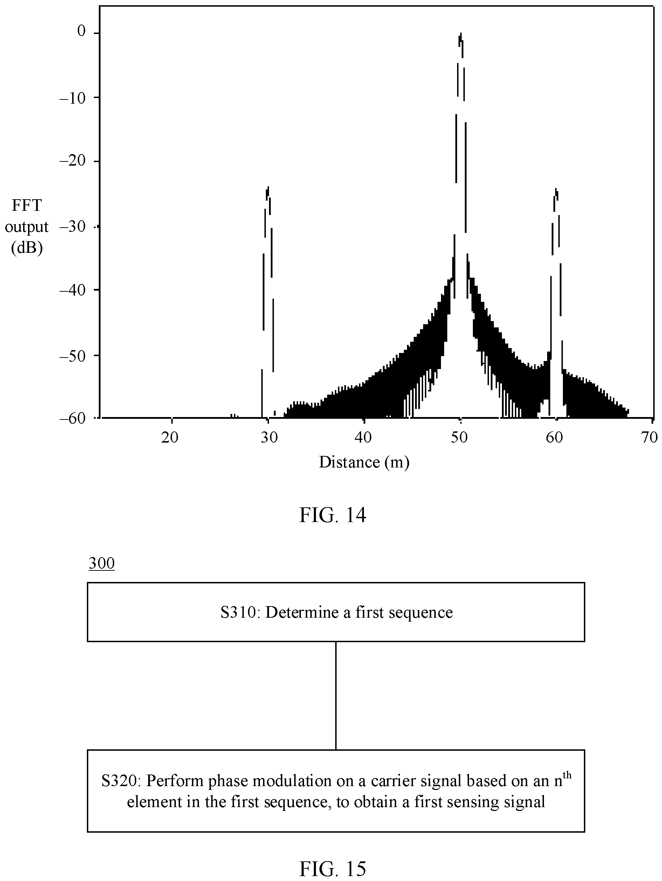

For example, FIG. 14 shows a result of measuring the distance between the target object and the first communication apparatus that is obtained based on the echo signals in the first 16 periods described in Example 2. It can be learned from FIG. 14 that there are three distances between the target object and the first communication apparatus, and the distances are respectively 30 m, 50 m, and 60 m.

For a process in which the first communication apparatus performs ranging after receiving echo signals in the second 16 periods, refer to related descriptions in Example 1. Details are not described herein again.

It can be learned from the foregoing descriptions of Example 1 that, in the second 16 periods, the beat frequency signal 1 generated by the interference signal 1 and the beat frequency signal 3 generated by the interference signal 2 are eliminated. Finally, the first communication apparatus only needs to perform spectrum analysis on the beat frequency signal 2 generated by the first signal, to obtain the distance between the target object and the first communication apparatus, and a quantity of the distances is only one. For example, it can be learned from FIG. 12 that the distance between the target object and the first communication apparatus is 50 m.

According to the foregoing descriptions of Example 2, in Example 2, the first communication apparatus may obtain three distances in the first 16 periods. After the first 16 periods, for example, in the second 16 periods, the first communication apparatus may obtain one distance. In this way, the first communication apparatus can filter out, based on first signals and second signals received in a plurality of 16 periods, false target objects caused by interference signals. For example, based on the distances obtained in the first 16 periods and distances obtained in a plurality of 16 periods after the first 16 periods, the distances 30 m and 60 m obtained in the first 16 periods can be filtered out. In this way, the first communication apparatus finally obtains only one distance between the target object and the first communication apparatus, that is, 50 m.

In Example 2, the second communication apparatus does not start to sense the target object until in the 15th period of the 16 periods in which the first communication apparatus senses the target object. That is, in the first 14 periods of the first 16 periods, the first communication apparatus does not receive the interference signal of the second communication apparatus, and only in the last two periods of the first 16 periods, that is, the 15th period and the 16th period, the first communication apparatus receives the interference signal of the second communication apparatus. In addition, starting from the second 16 periods, the first communication apparatus receives the interference signal of the second communication apparatus. In this case, although the first communication apparatus cannot completely eliminate the beat frequency signal generated by the interference signal in the last two periods of the first 16 periods, because an aperiodic correlation value between the first sequence and the second sequence is less than or equal to 0.0625, the beat frequency signal generated by the interference signal causes relatively low interference to the first communication apparatus in the last two periods of the first 16 periods. In addition, the first communication apparatus receives the interference signal of the second communication apparatus in all the second 16 periods. In this way, as in Example 1, because the first sequence and the second sequence have perfect periodic correlation, in the 16 periods, the first communication apparatus may eliminate the beat frequency signal generated by the interference signal. Finally, the first communication apparatus performs spectrum analysis only on the beat frequency signal generated by the echo signal, so as to obtain the distance between the target object and the first communication apparatus, and the quantity of the distances is only one.

In this way, the first communication apparatus can filter out a distance to a false target obtained in the first 16 periods with reference to the distances obtained in the first 16 periods and distances obtained in at least one 16 periods after the first 16 periods, so as to suppress interference caused by the second sensing signal transmitted by the second communication apparatus to the sensing process of the first communication apparatus. Further, the interference suppression capability of the first communication apparatus is further enhanced, and the sensing reliability of the first communication apparatus is improved.

In addition, an embodiment of this application further provides an example of a signal generation method. According to the signal generation method, an apparatus may first determine a sequence used by the apparatus to perform phase modulation on a signal, to ensure that the sequence is cyclically orthogonal to a sequence used by another apparatus to perform phase modulation on a same signal. Then, the apparatus performs phase modulation on the signal based on the determined sequence to obtain a sensing signal. In this way, the sensing signal generated by the apparatus causes relatively small interference to the another apparatus.

In an example, an apparatus to which the signal generation method is applied may be the first communication apparatus or the second communication apparatus described in the foregoing method 200. It should be understood that the following uses an example in which the apparatus is the first communication apparatus described in the foregoing method 200 for description, which shall not constitute a limitation on this application.

FIG. 15 is a schematic flowchart of an example of a signal generation method 300 according to an embodiment of this application.

For example, as shown in FIG. 15, the method 300 includes S310 and S320.

S310: Determine a first sequence.

In an example, the first sequence may be a preconfigured sequence. In other words, different apparatuses may preconfigure different sequences, and different sequences configured by different apparatuses are cyclically orthogonal to each other.

For example, in a scenario in which a quantity of apparatuses is fixed, for example, in a smart home scenario, an apparatus is usually pre-installed in each room to sense an object in the room. In this case, different sequences may be preconfigured for different apparatuses installed in different rooms, and different sequences preconfigured for different apparatuses are cyclically orthogonal to each other. For another example, in a road monitoring scenario, a location of a road-side unit (rode-side unit, RSU) (an example of a communication apparatus) is usually fixed. In this case, different sequences may be preconfigured for several adjacent road-side units, and different sequences preconfigured for different apparatuses are cyclically orthogonal to each other.

A preconfiguration end is not limited in this application. For example, the preconfiguration end may be a network device. In this case, if the first communication apparatus is a network device, it may be understood that the first communication apparatus is a preconfiguration end, that is, the first communication apparatus itself configures the first sequence for the first communication apparatus. If the first communication apparatus is not a network device, the first communication apparatus needs to obtain the first sequence from a network device. For another example, the preconfiguration end may alternatively be the first communication apparatus. In this case, regardless of a type of the first communication apparatus, the first communication apparatus is a preconfiguration end, that is, the first communication apparatus itself configures the first sequence for the first communication apparatus. For another example, the first sequence may alternatively be specified in a protocol.

Optionally, in this example, if there are a plurality of preconfigured first sequences, the first communication apparatus may select any sequence from the plurality of first sequences as the first sequence, or the first communication apparatus may use a sequence selected by a user from the plurality of first sequences as the first sequence.

In another example, the first sequence may be dynamically selected by the first communication apparatus.

For example, in a scenario in which a quantity of apparatuses is not fixed, for example, in a self-driving scenario, a quantity of vehicles around a vehicle is changeable. For another example, in a smart home scenario, sometimes, in addition to an apparatus pre-installed in a room, another apparatus (for example, a smart screen) in the room also senses a surrounding object (for example, the screen is turned on when a person comes, or the screen is turned off when the person walks away) during use. In this case, a quantity of apparatuses in the room is also changeable. In this way, when sensing a surrounding object, the vehicle may listen to a nearby sensing signal in advance to determine a sequence occupation status, and then select an unoccupied sequence based on a listening result.

In this example, S310 may specifically include the following steps:

S311: Detect a second signal.

It should be noted that the second signal includes a second sensing signal and/or a signal obtained by reflecting the second sensing signal by a target object. In addition, the second sensing signal includes third sub-signals in N periods. Therefore, detecting the second signal may be understood as detecting the third sub-signals in the N periods, and/or detecting signals obtained by reflecting the third sub-signals in the N periods by the target object.

For descriptions of the second signal, refer to related descriptions in the foregoing method 200. Details are not described herein again.

S312: Determine a second sequence based on the second signal and a preset orthogonal sequence set.

When N=8, the preset orthogonal sequence set may include a first preset sequence, a second preset sequence, a third preset sequence, and a fourth preset sequence. For descriptions of the first to the fourth preset sequences, refer to related descriptions in the foregoing method 200. Details are not described herein again.

When N=16, the preset orthogonal sequence set may include a fifth preset sequence, a sixth preset sequence, a seventh preset sequence, and an eighth preset sequence. For descriptions of the fifth to the eighth preset sequences, refer to related descriptions in the foregoing method 200. Details are not described herein again.

Because the second signal is a signal generated by a sensing signal transmitted by a second communication apparatus, the first communication apparatus may determine, based on the detected second signal, a sequence used by the second communication apparatus. In this way, the first communication apparatus removes, from the preset orthogonal sequence set, the sequence used by the second communication apparatus, and a remaining sequence can be used by the first communication apparatus. In this way, the following case can be prevented: The first communication apparatus and the second communication apparatus use a same preset sequence, and the first communication apparatus cannot suppress interference caused by the second sensing signal transmitted by the second communication apparatus to a sensing process of the first communication apparatus.

Specifically, the first communication apparatus may perform a periodic cross-correlation operation on the detected second signal and a sequence in the preset orthogonal sequence set, and determine, based on an operation result, the sequence used by the second communication apparatus.

When the result of the periodic cross-correlation operation performed on the detected second signal and a target sequence (a sequence in the preset orthogonal sequence set) is 0, it indicates that the sequence used by the second communication apparatus is not the target sequence, that is, the target sequence is not occupied. In this case, the target sequence may be used as the first sequence.

When the result of the periodic cross-correlation operation performed on the detected second signal and the target sequence (a sequence in the preset orthogonal sequence set) is not 0, it indicates that the sequence used by the second communication apparatus is the target sequence, that is, the target sequence is occupied. In this case, the first sequence may be determined from a sequence other than the target sequence in the preset orthogonal sequence set.

S313: Determine the first sequence from a sequence in the preset orthogonal sequence set other than the second sequence.

For example, it is assumed that before the first communication apparatus senses an object, other two apparatuses have already been in a process of sensing the object, one of the two apparatuses performs phase modulation on a second sub-signal by using the $S_0'$ sequence shown in Table 3, and the other apparatus performs phase modulation on the second sub-signal by using the $S_1'$ sequence shown in Table 3. In this case, signals in 16 (N=16) periods detected by the first communication apparatus in S310 are sequentially: $\alpha_1 S_0'[0]x(t\text{-}\tau_1)+\alpha_2 S_1'[0]x(t\text{-}\tau_2)$, $\alpha_1 S_0'[1]x(t\text{-}\tau_1)+\alpha_2 S_1'[1]x(t\text{-}\tau_2)$, ..., $\alpha_1 S_0'[15]x(t\text{-}\tau_1)+\alpha_2 S_1'[15]x(t\text{-}\tau_2)$. $\alpha_1, \alpha_2$ respectively represent power of sensing signals transmitted by the two apparatuses and received by the first communication apparatus, and $\tau_1, \tau_2$ respectively represents time at which the sensing signals transmitted by the two apparatuses arrive at the first communication apparatus.

Then, after detecting the signals in the 16 periods, the first communication apparatus separately performs a periodic cross-correlation operation by using the sequences in Table 2 and the detected signals in the 16 periods. For example, if $S_0'$ is used to perform a periodic cross-correlation operation with the detected signals in the 16 periods, an obtained operation result is:

$$S_0'[0]\big(\alpha_1 S_0'[0]x(t-\tau_1)+\alpha_2 S_1'[0]x(t-\tau_2)\big)+S_0'[1]\big(\alpha_1 S_0'[1]x(t-\tau_1)+\alpha_2 S_1'[1]x(t-\tau_2)\big)+\cdots$$
$$+S_0'[15]\big(\alpha_1 S_0'[15]x(t-\tau_1)+\alpha_2 S_1'[15]x(t-\tau_2)\big)=15\alpha_1 x(t-\tau_1)$$

Similarly, if $S_1'$ is used to perform a periodic cross-correlation operation with the detected signals in the 16 periods, an obtained operation result is:

$$S_1'[0]\big(\alpha_1 S_0'[0]x(t-\tau_1)+\alpha_2 S_1'[0]x(t-\tau_2)\big)+S_1'[1]\big(\alpha_1 S_0'[1]x(t-\tau_1)+\alpha_2 S_1'[1]x(t-\tau_2)\big)+\cdots$$
$$+S_1'[15]\big(\alpha_1 S_0'[15]x(t-\tau_1)+\alpha_2 S_1'[15]x(t-\tau_2)\big)=15\alpha_2 x(t-\tau_2)$$

Similarly, if $S_2'$ is used to perform a periodic cross-correlation operation with the detected signals in the 16 periods, an obtained operation result is:

$$S_2'[0]\big(\alpha_1 S_0'[0]x(t-\tau_1)+\alpha_2 S_1'[0]x(t-\tau_2)\big)+S_2'[1]\big(\alpha_1 S_0'[1]x(t-\tau_1)+\alpha_2 S_1'[1]x(t-\tau_2)\big)+\cdots$$
$$+S_2'[15]\big(\alpha_1 S_0'[15]x(t-\tau_1)+\alpha_2 S_1'[15]x(t-\tau_2)\big)=0$$

By analogy, until a periodic cross-correlation operation is performed on $S_{20}'$ and the detected signals in the 16 periods. In this way, according to the operation results, it can be learned that only the operation results of the periodic cross-correlation operation on each of $S_0'$ and $S_1'$ and the detected signals in the 16 periods are 0, and the operation results of the periodic cross-correlation operation performed on each of $S_2'$ to $S_{20}'$ and the detected signals in the 16 periods are not 0. In this case, it may be determined that $S_0'$ and $S_1'$ have been used by other apparatuses, and $S_2'$ to $S_{20}'$ are not used by other apparatuses. In this case, the first communication apparatus may use any sequence in $S_2'$ to $S_{20}'$ as the first sequence, or the first communication apparatus may use a sequence obtained by performing cyclic shift on any sequence in $S_2'$ to $S_{20}'$ as the first sequence.

Optionally, in this example, if the first communication apparatus determines a plurality of first sequences, the first communication apparatus may select any sequence from the plurality of first sequences as the first sequence, or the first communication apparatus may use a sequence selected by a user from the plurality of first sequences as the first sequence.

S320: Perform phase modulation on a second sub-signal based on an $n^{th}$ element in the first sequence, to obtain a first sensing signal.

For descriptions of same content in S300 and the method 200, refer to related descriptions in the method 200. Details are not described herein again.

It should be noted that the signal generation method 300 may be used in combination with the method 200. That is, before S210 in the method 200, the first communication apparatus may generate the first sensing signal according to the signal generation method 300. Alternatively, before S220 in the method 200, the second communication apparatus may generate the second sensing signal according to the signal generation method 300. In this case, it is only necessary to replace the first communication apparatus in the method 300 with the first communication apparatus, the first sequence with the second sequence, the second sequence with the first sequence, and the second signal with the first signal.

Certainly, the signal generation method 300 and the method 200 may alternatively be used separately. This is not limited in this application.

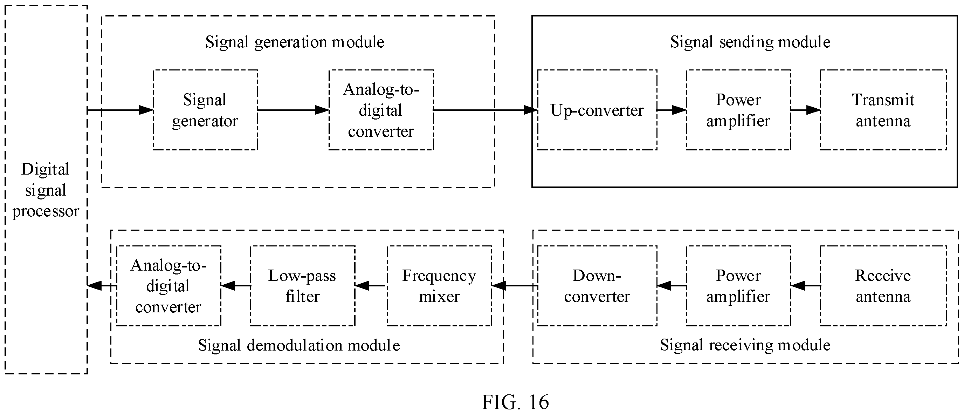

The following describes in detail communication apparatuses in embodiments of this application with reference to FIG. 16 to FIG. 18.

FIG. 16 is a diagram of a structure of an example of a communication apparatus according to an embodiment of this application.

For example, the communication apparatus shown in FIG. 16 may be the first communication apparatus or the second communication apparatus in the foregoing embodiment. The following uses an example in which the communication apparatus is the first communication apparatus for description.

For example, as shown in FIG. 16, the communication apparatus includes a signal sending module, and the signal sending module is configured to send a first sensing signal.

For example, the signal sending module may include an up-converter, a power amplifier, and a transmit antenna. The up-converter is configured to modulate the first sensing signal from a baseband signal to a high-frequency carrier. The power amplifier is configured to amplify power of the first sensing signal modulated to the high-frequency carrier. The transmit antenna is configured to transmit the first sensing signal.

Optionally, in an example, the communication apparatus may further include a signal generation module, and the signal generation module is configured to send the first sensing signal.

Optionally, in an example, the signal generation module includes a signal generator and an analog-to-digital converter. The signal generator is configured to generate the first sensing signal, and the analog-to-digital converter is configured to convert the first sensing signal generated by the signal generator from an analog signal into a digital signal.

Optionally, in an example, the communication apparatus further includes a digital signal processor, configured to send, to the signal generator in the signal generation module, signaling used to trigger generation of the first sensing signal. In this way, after receiving the instruction sent by the digital signal processor, the signal generator generates the first sensing signal.

Optionally, in an example, the communication apparatus may further include a signal receiving module, configured to receive a first signal and a second signal.

For example, the signal receiving module may include a receive antenna, a power amplifier, and a down-converter. The receive antenna is configured to receive the first signal and the second signal. The power amplifier is configured to amplify power of the first signal and the second signal. The down-converter is configured to demodulate the first signal from a high-frequency carrier to obtain a first baseband signal and demodulate the second signal from the high-frequency carrier to obtain a second baseband signal.

Optionally, in an example, the communication apparatus may further include a signal demodulation module, configured to demodulate the first baseband signal and the second baseband signal.

For example, the signal demodulation module may include a frequency mixer, a low-pass filter, and an analog-to-digital converter. The frequency mixer is configured to separately perform frequency mixing on each of the first signal and the second signal, and the first sensing signal, to obtain corresponding frequency mixed signals. The low-pass filter is configured to perform low-pass filtering on the frequency mixed signal to obtain a beat frequency signal. The analog-to-digital converter is configured to convert the beat frequency signal from a digital signal to an analog signal.

Optionally, in an example in which the communication apparatus further includes a digital signal processor, the digital signal processor is further configured to perform spectrum analysis on the beat frequency signal, so as to complete sensing of a target object.

It should be noted that, for the first sensing signal, the first signal, and the second signal that are not described in the communication apparatus shown in FIG. 16, refer to related descriptions in the foregoing 200. Details are not described herein again. In addition, for how the signal generator generates the first sensing signal, refer to related descriptions in the method 300. Details are not described herein again.

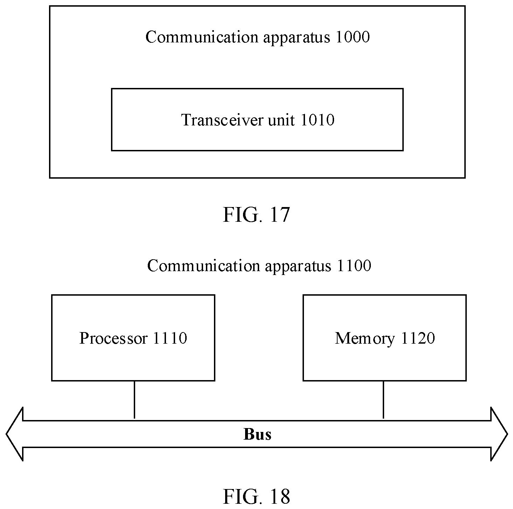

FIG. 17 is a diagram of a structure of an example of a communication apparatus 1000 according to an embodiment of this application.

For example, as shown in FIG. 17, the communication apparatus 1000 includes a transceiver unit 1010, and the transceiver unit 1010 may communicate with the outside. The transceiver unit 1010 may also be referred to as a communication interface or a communication unit.

Optionally, the communication apparatus 1000 may further include a processing unit 1020, configured to process data.

Optionally, the communication apparatus 1000 may further include a storage unit. The storage unit may be configured to store instructions and/or data. The processing unit 1020 may read the instructions and/or the data in the storage unit.

In a possible implementation, the communication apparatus 1000 may be configured to perform an action performed by the first communication apparatus in the foregoing method embodiment. In this case, the communication apparatus 1000 may be the first communication apparatus or a component that can be configured in the first communication apparatus. The transceiver unit 1010 is configured to perform a receiving and sending related operation on the first communication apparatus side in the foregoing method embodiment. The processing unit 1020 is configured to perform a processing related operation on the first communication apparatus side in the foregoing method embodiment.

In another possible implementation, the communication apparatus 1000 may be configured to perform an action performed by the second communication apparatus in the foregoing method embodiment. In this case, the communication apparatus 1000 may be the second communication apparatus or a component that can be configured in the second communication apparatus. The transceiver unit 1010 is configured to perform a receiving and sending related operation of the second communication apparatus in the foregoing method embodiment. The processing unit 1020 is configured to perform a processing related operation on the second communication apparatus side in the foregoing method embodiment.

FIG. 18 is a diagram of a structure of a communication apparatus 1100 according to an embodiment of this application.

For example, the communication apparatus 1100 may be the first communication apparatus or the second communication apparatus in the foregoing embodiment.

As shown in FIG. 18, the communication apparatus 1100 includes one or more processors 1110 and one or more memories 1120. The one or more memories 1120 store one or more computer programs, and the one or more computer programs include instructions. When the instructions are run by the one or more processors 1110, the communication apparatus 1100 is enabled to perform the technical solution performed by the first communication apparatus in the foregoing embodiment, or the apparatus 1100 is enabled to perform the technical solution performed by the second communication apparatus in the foregoing embodiment.

An embodiment of this application provides a communication system, including a first communication apparatus and at least one second communication apparatus. The system is configured to perform the technical solutions in the foregoing embodiments. An implementation principle and technical effect thereof are similar to those of the foregoing method-related embodiment. Details are not described herein again.

An embodiment of this application provides a computer program product. When the computer program product is run on a device, the communication apparatus is enabled to perform the technical solutions in the foregoing embodiments. An implementation principle and technical effect thereof are similar to those of the foregoing method-related embodiment. Details are not described herein again. The communication apparatus may include the first communication apparatus or the second communication apparatus described in the foregoing embodiment.

An embodiment of this application provides a readable storage medium. The readable storage medium includes instructions. When the instructions are run on a communication apparatus, the communication apparatus is enabled to perform the technical solutions of the foregoing embodiments. An implementation principle and technical effect thereof are similar. Details are not described herein again. The communication apparatus may include the first communication apparatus or the second communication apparatus described in the foregoing embodiment.

An embodiment of this application provides a chip. The chip is configured to execute instructions. When the chip runs, the technical solutions in the foregoing embodiments are performed. An implementation principle and technical effect thereof are similar. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sensing method, wherein the sensing method is applied to a first communication apparatus, and the sensing method comprises:

   sending a first sensing signal, wherein the first sensing signal comprises first sub-signals in N periods, a first sub-signal in an $n^{th}$ period is a signal obtained by performing phase modulation on a second sub-signal based on an $n^{th}$ element in a first sequence, N is a positive integer greater than 0, n=1, 2, ..., N, and the first sequence is a binary sequence that comprises N elements;
   when N=8, the first sequence is any one of a first preset sequence, a second preset sequence, a third preset sequence, and a fourth preset sequence, or the first sequence is a sequence obtained by performing cyclic shift on any one of a first preset sequence, a second preset sequence, a third preset sequence, and a fourth preset sequence, wherein
   the first preset sequence is {1, 1, 1, 1, 1, 1, 1, 1},
   the second preset sequence is {1, -1, 1, -1, 1, -1, 1, -1},
   the third preset sequence is {1, -1, -1, 1, 1, -1, -1, 1}, and
   the fourth preset sequence is {1, -1, -1, -1, -1, 1, 1, 1} or {1, -1, 1, 1, -1, 1, -1, -1}; and
   when N=16, the first sequence is any one of a fifth preset sequence, a sixth preset sequence, a seventh preset sequence, an eighth preset sequence, and a ninth preset sequence, or the first sequence is a sequence obtained by performing cyclic shift on any one of a fifth preset sequence, a sixth preset sequence, a seventh preset sequence, an eighth preset sequence, and a ninth preset sequence, wherein
   the fifth preset sequence is {1, 1, 1, 1, 1, 1, 1, 1, 1, 1, 1, 1, 1, 1, 1, 1};
   the sixth preset sequence is {1, -1, 1, -1, 1, -1, 1, -1, 1, -1, 1, -1, 1, -1, 1, -1};
   the seventh preset sequence is {1, 1, -1, -1, 1, 1, -1, -1, 1, 1, -1, -1, 1, 1, -1, -1};
   the eighth preset sequence is {1, 1, 1, -1, -1, -1, -1, 1, 1, 1, 1, -1, -1, -1, -1, 1}, or
   the eighth preset sequence is {1, 1, -1, 1, -1, -1, 1, -1, 1, 1, -1, 1, -1, -1, 1, -1}; and
   the ninth preset sequence is {1, -1, 1, 1, -1, -1, -1, 1, -1, 1, -1, -1, 1, 1, 1, -1 }, or
   the ninth preset sequence is {1, -1, -1, -1, 1, 1, -1, 1, -1, 1, 1, 1, -1, -1, 1, -1 }, or
   the ninth preset sequence is {1, 1, 1, -1, 1, 1, 1, -1, -1, -1, -1, 1, -1, -1, -1, 1}, or
   the ninth preset sequence is {1, -1, -1, 1, 1, -1, 1, -1, -1, 1, 1, -1, -1, 1, -1, 1}, or
   the ninth preset sequence is {1, 1, 1, 1, 1, -1, -1, -1, -1, -1, -1, -1, -1, 1, 1, 1}, or
   the ninth preset sequence is {1, 1, 1, -1, 1, -1, -1, -1, -1, -1, -1, 1, -1, 1, 1, 1}, or
   the ninth preset sequence is {1, -1, 1, 1, -1, -1, -1, -1, -1, 1, -1, -1, 1, 1, 1, 1}, or
   the ninth preset sequence is {1, -1, -1, -1, -1, -1, 1, 1, -1, 1, 1, 1, 1, 1, -1, -1}, or
   the ninth preset sequence is {1, -1, 1, 1, 1, 1, -1, 1, -1, 1, -1, -1, -1, -1, 1, -1 }, or
   the ninth preset sequence is {1, -1, -1, -1, -1, 1, 1, -1, -1, 1, 1, 1, 1, -1, -1, 1}, or
   the ninth preset sequence is {1, -1, -1, -1, -1, 1, 1, 1, -1, 1, 1, 1, 1, -1, -1, -1}, or
   the ninth preset sequence is {1, 1, 1, -1, 1, 1, -1, 1, -1, -1, -1, 1, -1, -1, 1, -1}, or
   the ninth preset sequence is {1, -1, 1, 1, -1, 1, 1, 1, -1, 1, -1, -1, 1, -1, -1, -1}, or
   the ninth preset sequence is {1, -1, -1, -1, 1, 1, 1, -1, -1, 1, 1, 1, -1, -1, -1, 1}, or
   the ninth preset sequence is {1, -1, 1, 1, -1, -1, 1, -1, -1, 1, -1, -1, 1, 1, -1, 1}, or
   the ninth preset sequence is {1, -1, 1, -1, 1, 1, -1, 1, -1, 1, -1, 1, -1, -1, 1, -1}.

2. The sensing method according to claim 1, wherein after the sending a first sensing signal, the sensing method further comprises:

   receiving a first signal and a second signal; and
   determining a distance between the first communication apparatus and a target object based on the first sensing signal, the first signal, and the second signal, wherein
   the first signal is a signal obtained by reflecting the first sensing signal by the target object;

the second signal comprises a second sensing signal and/or a signal obtained by reflecting the second sensing signal by the target object, the second sensing signal is transmitted by a second communication apparatus, the second sensing signal comprises third sub-signals in N periods, a third sub-signal in an $n^{th}$ period is a signal obtained by performing phase modulation on the second sub-signal based on an $n^{th}$ element in a second sequence, and the second sequence is a binary sequence that comprises N elements;

when N=8, the second sequence is any one of the first preset sequence, the second preset sequence, the third preset sequence, and the fourth preset sequence, or the second sequence is a sequence obtained by performing cyclic shift on any one of the first preset sequence, the second preset sequence, the third preset sequence, and the fourth preset sequence, and the second sequence and the first sequence are different preset sequences; and

when N=16, the second sequence is any one of the fifth preset sequence, the sixth preset sequence, the seventh preset sequence, the eighth preset sequence, and the ninth preset sequence, or the second sequence is a sequence obtained by performing cyclic shift on any one of the fifth preset sequence, the sixth preset sequence, the seventh preset sequence, the eighth preset sequence, and the ninth preset sequence, and the second sequence and the first sequence are different preset sequences.

3. The sensing method according to claim 1 or 2, wherein before the sending a first sensing signal, the sensing method further comprises:

   determining the first sequence; and
   performing phase modulation on the second sub-signal based on the $n^{th}$ element in the first sequence, to obtain the first sensing signal.

4. The sensing method according to claim 3, wherein the determining the first sequence comprises:

   detecting the second signal, wherein the second signal comprises the second sensing signal and/or the signal obtained by reflecting the second sensing signal by the target object;
   determining the second sequence based on the second signal and a preset orthogonal sequence set; and
   determining the first sequence from a sequence in the preset orthogonal sequence set other than the second sequence, wherein
   when N=8, the preset orthogonal sequence set comprises the first preset sequence, the second preset sequence, the third preset sequence, and the fourth preset sequence; and
   when N=16, the preset orthogonal sequence set comprises the fifth preset sequence, the sixth preset sequence, the seventh preset sequence, the eighth preset sequence, and the ninth preset sequence.

5. The sensing method according to claim 3, wherein the first sequence is a preconfigured sequence.

6. The sensing method according to any one of claims 1 to 5, wherein the first communication apparatus is a radar, or the first communication apparatus is a terminal device or a network device having a radar function.

7. The sensing method according to any one of claims 2 to 6, wherein the second sub-signal comprises a frequency modulated continuous wave FMCW signal, a cyclic prefix orthogonal frequency division multiplexing CP-OFDM signal, a discrete Fourier transform spread orthogonal frequency division multiplexing DFT-s-OFDM signal, or a single carrier SC signal.

8. A communication system, wherein the communication system comprises:

   a first communication apparatus, configured to send a first sensing signal, wherein the first sensing signal comprises first sub-signals in N periods, a first sub-signal in an $n^{th}$ period is a signal obtained by performing phase modulation on a second sub-signal based on an $n^{th}$ element in a first sequence, N is a positive integer greater than 0, n=1, 2, ..., N, and the first sequence is a binary sequence that comprises N elements; and
   a second communication apparatus, configured to send a second sensing signal, wherein the second sensing signal comprises third sub-signals in N periods, a third sub-signal in an $n^{th}$ period is a signal obtained by performing phase modulation on the second sub-signal based on an $n^{th}$ element in a second sequence, and the second sequence is a binary sequence that comprises N elements;
   the first communication apparatus is further configured to receive a first signal and a second signal, wherein the first signal is a signal obtained by reflecting the first sensing signal by a target object, and the second signal comprises the second sensing signal and/or a signal obtained by reflecting the second sensing signal by the target object;

the first communication apparatus is further configured to determine a distance between the first communication apparatus and the target object based on the first sensing signal, the first signal, and the second signal;

when N=8, the first sequence is any one of a first preset sequence, a second preset sequence, a third preset sequence, and a fourth preset sequence, or the first sequence is a sequence obtained by performing cyclic shift on any one of a first preset sequence, a second preset sequence, a third preset sequence, and a fourth preset sequence, and

the second sequence is any one of the first preset sequence, the second preset sequence, the third preset sequence, and the fourth preset sequence, or the second sequence is a sequence obtained by performing cyclic shift on any one of the first preset sequence, the second preset sequence, the third preset sequence, and the fourth preset sequence, and the second sequence and the first sequence are different preset sequences, wherein

the first preset sequence is {1, 1, 1, 1, 1, 1, 1, 1},

the second preset sequence is {1, -1, 1, -1, 1, -1, 1, -1},

the third preset sequence is {1, -1, -1, 1, 1, -1, -1, 1}, and

the fourth preset sequence is {1, -1, -1, -1, -1, 1, 1, 1} or {1, -1, 1, 1, -1, 1, -1, -1}; and

when N=16, the first sequence is any one of a fifth preset sequence, a sixth preset sequence, a seventh preset sequence, an eighth preset sequence, and a ninth preset sequence, or the first sequence is a sequence obtained by performing cyclic shift on any one of a fifth preset sequence, a sixth preset sequence, a seventh preset sequence, an eighth preset sequence, and a ninth preset sequence, and

the second sequence is any one of the fifth preset sequence, the sixth preset sequence, the seventh preset sequence, the eighth preset sequence, and the ninth preset sequence, or the second sequence is a sequence obtained by performing cyclic shift on any one of the fifth preset sequence, the sixth preset sequence, the seventh preset sequence, the eighth preset sequence, and the ninth preset sequence, and the second sequence and the first sequence are different preset sequences, and the second sequence and the first sequence are different preset sequences, wherein

the fifth preset sequence is {1, 1, 1, 1, 1, 1, 1, 1, 1, 1, 1, 1, 1, 1, 1, 1};

the sixth preset sequence is {1, -1, 1, -1, 1, -1, 1, -1, 1, -1, 1, -1, 1, -1, 1, -1};

the seventh preset sequence is {1, 1, -1, -1, 1, 1, -1, -1, 1, 1, -1, -1, 1, 1, -1, -1};

the eighth preset sequence is {1, 1, 1, -1, -1, -1, -1, 1, 1, 1, 1, -1, -1, -1, -1, 1}, or

the eighth preset sequence is {1, 1, -1, 1, -1, -1, 1, -1, 1, 1, -1, 1, -1, -1, 1, -1}; and

the ninth preset sequence is {1, -1, 1, 1, -1, -1, -1, 1, -1, 1, -1, -1, 1, 1, 1, -1}, or

the ninth preset sequence is {1, -1, -1, -1, 1, 1, -1, 1, -1, 1, 1, 1, -1, -1, 1, -1 }, or

the ninth preset sequence is {1, 1, 1, -1, 1, 1, 1, -1, -1, -1, -1, 1, -1, -1, -1, 1}, or

the ninth preset sequence is {1, -1, -1, 1, 1, -1, 1, -1, -1, 1, 1, -1, -1, 1, -1, 1}, or

the ninth preset sequence is {1, 1, 1, 1, 1, -1, -1, -1, -1, -1, -1, -1, -1, 1, 1, 1}, or

the ninth preset sequence is {1, 1, 1, -1, 1, -1, -1, -1, -1, -1, -1, 1, -1, 1, 1, 1}, or

the ninth preset sequence is {1, -1, 1, 1, -1, -1, -1, -1, -1, 1, -1, -1, 1, 1, 1, 1}, or

the ninth preset sequence is {1, -1, -1, -1, -1, -1, 1, 1, -1, 1, 1, 1, 1, 1, -1, -1}, or

the ninth preset sequence is {1, -1, 1, 1, 1, 1, -1, 1, -1, 1, -1, -1, -1, -1, 1, -1 }, or

the ninth preset sequence is {1, -1, -1, -1, -1, 1, 1, -1, -1, 1, 1, 1, 1, -1, -1, 1}, or

the ninth preset sequence is {1, -1, -1, -1, -1, 1, 1, 1, -1, 1, 1, 1, 1, -1, -1, -1}, or

the ninth preset sequence is {1, 1, 1, -1, 1, 1, -1, 1, -1, -1, -1, 1, -1, -1, 1, -1 }, or

the ninth preset sequence is {1, -1, 1, 1, -1, 1, 1, 1, -1, 1, -1, -1, 1, -1, -1, -1}, or

the ninth preset sequence is {1, -1, -1, -1, 1, 1, 1, -1, -1, 1, 1, 1, -1, -1, -1, 1}, or

the ninth preset sequence is {1, -1, 1, 1, -1, -1, 1, -1, -1, 1, -1, -1, 1, 1, -1, 1}, or

the ninth preset sequence is {1, -1, 1, -1, 1, 1, -1, 1, -1, 1, -1, 1, -1, -1, 1, -1}.

9. The communication system according to claim 8, wherein before the first communication apparatus is configured to send the first sensing signal, the first communication apparatus is further configured to:

determine the first sequence; and
perform phase modulation on the second sub-signal based on the $n^{th}$ element in the first sequence, to obtain the first sensing signal.

10. The communication system according to claim 9, wherein the first communication apparatus is further specifically configured to:

detect the second signal;
determine the second sequence based on the second signal and a preset orthogonal sequence set; and

determine the first sequence from a sequence in the preset orthogonal sequence set other than the second sequence, wherein

when N=8, the preset orthogonal sequence set comprises the first preset sequence, the second preset sequence, the third preset sequence, and the fourth preset sequence; and

when N=16, the preset orthogonal sequence set comprises the fifth preset sequence, the sixth preset sequence, the seventh preset sequence, the eighth preset sequence, and the ninth preset sequence.

11. The communication system according to claim 9, wherein the first sequence is a preconfigured sequence.

12. The communication system according to any one of claim 8, 9, or 11, wherein before the second communication apparatus is configured to send the second sensing signal, the second communication apparatus is further configured to:

determine the second sequence; and

perform phase modulation on the second sub-signal based on the $n^{th}$ element in the second sequence, to obtain the second sensing signal.

13. The communication system according to claim 12, wherein the second communication apparatus is further specifically configured to:

detect a third signal, wherein the third signal comprises the first sensing signal and/or the signal obtained by reflecting the first sensing signal by the target object;

determine the first sequence based on the third signal and a preset orthogonal sequence set; and

determine the second sequence from a sequence other than the first sequence in the preset orthogonal sequence set, wherein

when N=8, the preset orthogonal sequence set comprises the first preset sequence, the second preset sequence, the third preset sequence, and the fourth preset sequence; and

when N=16, the preset orthogonal sequence set comprises the fifth preset sequence, the sixth preset sequence, the seventh preset sequence, the eighth preset sequence, and the ninth preset sequence.

14. The communication system according to claim 12, wherein the second sequence is a preconfigured sequence.

15. The communication system according to any one of claims 8 to 14, wherein the first communication apparatus is a radar, or the first communication apparatus is a terminal device or a network device having a radar function; and/or the second communication apparatus is a radar, or the second communication apparatus is a terminal device or a network device having a radar function.

16. The communication system according to any one of claims 8 to 15, wherein the second sub-signal comprises a frequency modulated continuous wave FMCW signal, a cyclic prefix orthogonal frequency division multiplexing CP-OFDM signal, a discrete Fourier transform spread orthogonal frequency division multiplexing DFT-s-OFDM signal, or a single carrier SC signal.

17. A communication apparatus, comprising:

one or more processors;

one or more memories; and

one or more computer programs, wherein the one or more computer programs are stored in the one or more memories, the one or more computer programs comprise instructions, and when the instructions are executed by the one or more processors, the communication apparatus is enabled to perform the sensing method according to any one of claims 1 to 7.

18. A computer-readable storage medium, comprising computer instructions, wherein when the computer instructions are run on a communication apparatus, the communication apparatus is enabled to perform the sensing method according to any one of claims 1 to 7.

19. A chip, comprising at least one processor and an interface circuit, wherein the interface circuit is configured to provide program instructions or data for the at least one processor, and the at least one processor is configured to execute the program instructions, to implement the sensing method according to any one of claims 1 to 7.

**20.** A computer program product, wherein the computer program product comprises computer instructions; and when a part or all of the computer instructions are run on a computer, the sensing method according to any one of claims 1 to 7 is enabled to be performed.

FIG. 1

FIG. 2

FIG. 3

(a)

(b)

FIG. 4

FIG. 5

FIG. 6

FIG. 7

FIG. 8

FIG. 9

200

S210: Send a first sensing signal

S230: Receive a first signal and a second signal

S240: Determine a distance between a first communication apparatus and a target object based on the first sensing signal, the first signal, and the second signal

FIG. 10

FIG. 11

FIG. 12

FIG. 13

FIG. 14

300

| S310: Determine a first sequence |
| --- |

| S320: Perform phase modulation on a carrier signal based on an $n^{th}$ element in the first sequence, to obtain a first sensing signal |
| --- |

FIG. 15

FIG. 16

Communication apparatus 1000

Transceiver unit 1010

FIG. 17

Communication apparatus 1100

Processor 1110

Memory 1120

Bus

FIG. 18

## INTERNATIONAL SEARCH REPORT

| International application No. |
|---|
| **PCT/CN2023/098783** |

**A. CLASSIFICATION OF SUBJECT MATTER**

G01S 13/32(2006.01)i

According to International Patent Classification (IPC) or to both national classification and IPC

**B. FIELDS SEARCHED**

Minimum documentation searched (classification system followed by classification symbols)

IPC：G01S

Documentation searched other than minimum documentation to the extent that such documents are included in the fields searched

Electronic data base consulted during the international search (name of data base and, where practicable, search terms used)

CNTXT, ENTXT, CNKI: 感知, 探测, 测距, 雷达, 回波, 反射波, 周期, 相位调制, 调相, 连续波, 干扰, 二元, 序列, sounding, detect, ranging, radar, echo, periodic, phase modulation, continuous, wave, interference, binary, sequence

**C. DOCUMENTS CONSIDERED TO BE RELEVANT**

| Category* | Citation of document, with indication, where appropriate, of the relevant passages | Relevant to claim No. |
|---|---|---|
| A | CN 105264400 A (ROBERT BOSCH CO., LTD.) 20 January 2016 (2016-01-20) claims 1-15, and description, paragraphs 38-78 | 1-20 |
| A | CN 111538026 A (FREETECH INTELLIGENT SYSTEMS CO., LTD.) 14 August 2020 (2020-08-14) entire document | 1-20 |
| A | US 2017212213 A1 (PANASONIC CORPORATION) 27 July 2017 (2017-07-27) entire document | 1-20 |
| A | 何国胤等 (HE, Guoyin et al.). "一种特殊二元序列在间断连续波雷达中的应用 (Binary Sequences of Arbitrary Length With Near-ideal Correlation)" 指挥技术学院学报 (Journal of Institute of Command and Technology), Vol. 12, No. 3, 30 June 2001 (2001-06-30), entire document | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 July 2023** | **20 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/098783**

| Patent document cited in search report | | | Publication date (day/month/year) | Patent family member(s) | | | Publication date (day/month/year) |
|---|---|---|---|---|---|---|---|
| CN | 105264400 | A | 20 January 2016 | US | 2016124075 | A1 | 05 May 2016 |
| | | | | DE | 102013210256 | A1 | 04 December 2014 |
| | | | | WO | 2014195046 | A1 | 11 December 2014 |
| | | | | EP | 3004918 | A1 | 13 April 2016 |
| | | | | JP | 2016524143 | A | 12 August 2016 |
| CN | 111538026 | A | 14 August 2020 | None | | | |
| US | 2017212213 | A1 | 27 July 2017 | JP | 2017032522 | A | 09 February 2017 |
| | | | | CN | 106443653 | A | 22 February 2017 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210667206

- CN 202210829804